(19) Europäisches Patentamt
European Patent Office
Office européen des brevets

(11) Veröffentlichungsnummer: **0 308 539**
**A1**

(12) **EUROPÄISCHE PATENTANMELDUNG**

(21) Anmeldenummer: **87114705.4**

(51) Int. Cl.4: **G05B 19/403**

(22) Anmeldetag: **08.10.87**

(30) Priorität: **25.09.87 EP 87114031**

(43) Veröffentlichungstag der Anmeldung: **29.03.89 Patentblatt 89/13**

(84) Benannte Vertragsstaaten: **AT BE CH DE ES FR GB IT LI NL SE**

(71) Anmelder: **Waldrich Siegen Werkzeugmaschinenbau GmbH**
**Daimlerstrasse 24**
**D-5909 Burbach(DE)**

(72) Erfinder: **Romero, Jorge Enrique**
**4325 Majesty Court Rockford**
**Illinois 61109(US)**
Erfinder: **Trank, Robert Carl**
**3436 Chadwick Drive Rockford**
**Illinois 61109(US)**

(74) Vertreter: **Müller, Gerd et al**
**Patentanwälte**
**HEMMERICH-MÜLLER-GROSSE-POLLMEIER--MEY Hammerstrasse 2**
**D-5900 Siegen 1(DE)**

(54) **Verfahren zum Ausrichten einer konkreten bzw. wirklichen Fläche, z. B. einer Form, auf ein internes Koordinatensystem einer sich relativ zu ihr bewegenden Maschine, insbesondere einer Mehrachsen-Bandlegemaschine sowie Positionierungssystem bzw. -vorrichtung zur Durchführung des verfahrens.**

(57) Es wird ein Verfahren und eine Vorrichtung zum gegenseitigen Ausrichten einer konkreten bzw. wirklichen Fläche auf das interne Koordinatensystem einer dieser konkreten bzw. wirklichen Fläche entsprechenden mathematischen Abbildung in einer Maschine beschrieben, welche mit der konkreten bzw. wirklichen Fläche, z.B. einer Form, zusammenarbeitet. Die der wirklichen bzw. konkreten Fläche zugeordnete Maschine wird dabei durch ein Teilprogramm gesteuert, das die Bewegungsabläufe bestimmt und dabei auf die mit mehreren Bezugspunkten markierte, konkrete bzw. wirkliche Fläche ausgerichtet werden muß.

Mit einem Meßsondensystem der Maschine können dabei die auf das interne Koordinatensystem der Maschine bezogenen Koordinaten der Bezugspunkte gemessen werden. Die dadurch erhaltenen Meßwerte und die entsprechenden Punkte der mathematischen Flächenabbildung ermöglichen dann, daß eine Transformationsfunktion für die auf die eine Fläche bezogene Drehung und Verschiebung der anderen Fläche generiert werden kann. Die in den Befehlen des Teilprogrammes enthaltenen geometrischen Daten werden dann vor ihrer Übertragung auf die Maschine aus ihrer Ausrichtung auf die mathematische Flächenabbildung heraus in eine andere, auf die konkrete bzw. wirkliche Fläche bezogene Ausrichtung gebracht.

EP 0 308 539 A1

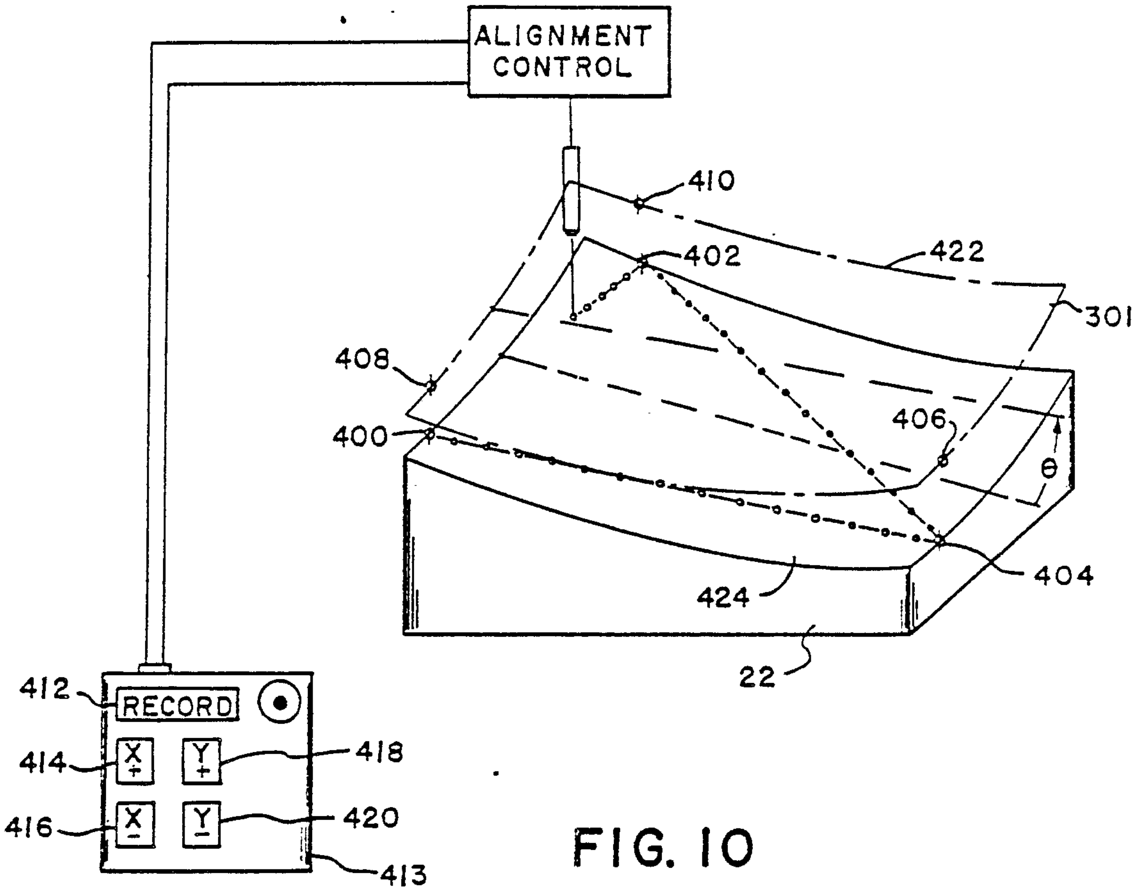
ALIGNMENT CONTROL
410
402
422
301
408
406
400
θ
404
424
22
412
RECORD
414
X +
Y +
418
416
X −
Y −
420
413

FIG. 10

# Verfahren zum Ausrichten einer konkreten bzw. wirklichen Fläche, z.B. einer Form, auf ein internes Koordinatensystem einer sich relativ zu ihr bewegenden Maschine, insbesondere einer Mehrachsen-Bandlegemaschine sowie Positionierungssystem bzw. -vorrichtung zur Durchführung des Verfahrens

Die Erfindung betrifft ein Verfahren zum Ausrichten einer konkreten bzw. wirklichen Fläche, z.B. einer Form oder auch eines Werkstückes, auf ein internes Koordinatensystem einer sich relativ zu dieser Fläche bewegenden Maschine, deren Bewegungsabläufe von einem Teilprogramm mit einer Reihe von Flächenpunkten und mit einer Betriebsfunktion gesteuert und geregelt werden, wobei mit den Flächenpunkten anhand einer mathematischen Abbildung der konkreten bzw. wirklichen Fläche eine von der Maschine zurückzulegende Bahn definiert ist und wobei die Betriebsfunktion auf das interne Koordinatensystem bezogen ist.

Das erfindungsgemäße Verfahren soll insbesondere zum Einsatz gelangen bei einer Mehrachsen-Bandlegemaschine, mit der ein aus einem Verbundwerkstoff bestehender Bandmaterialstreifen in ausgewählten und zueinander im wesentlichen parallelen Bahnen als eine konforme Bandmaterialschicht auf eine Form aufbringbar ist und dann dieser ersten Bandmaterialschicht zur Bildung einer Schichtstruktur auf der Form weitere und gleichartige Bandmaterialschichten überlagerbar sind.

Im Rahmen der Erfindung werden als Verbundwerkstoffe solche Werkstoffe in Betracht gezogen, bei denen eine Vielzahl von im wesentlichen hochfesten Fasern oder Faserbündeln, z.B. aus Graphit oder einem anderen Material, in einer Grundmasse eingebettet sind, welche aus wärmehärtbarem Kunststoff besteht und nach dem Aushärten die gegenseitige Ausrichtung und Zuordnung der Fasern oder Faserbündeln auch unter Belastung gewährleistet.

Plattenförmige Gegenstände, aber auch Hohlkörper, werden normalerweise aus mit Kunstharz imprägnierten Fasergeweben oder aber Bandmaterialstreifen hergestellt, bei denen die Fasern in Längsrichtung ausgerichtet sind.

Besonders dann, wenn Bandmaterialstreifen aus solchem Verbundwerkstoff entlang ausgewählter Verlegebahnen angeordnet werden, ist es wichtig, daß die im Kunststoff eingebetteten Fasern bzw. Faserbündel in Richtung der zu erwartenden, wesentlichen Zugkräfte ausgerichtet sind.

Zu den Gegenständen, die auf diese Art und Weise gebildet und hergestellt werden, gehören vor allem Konstruktionsteile für den Flugzeugbau, und zwar insbesondere solche, die aerodynamisch geformte Flächen aufweisen.

Bei der Herstellung solcher Konstruktionsteile, insbesondere Flugzeugteile, mit gekrümmten Flächen werden bisher vorimprägnierte Matten oder Bandmaterialstreifen in einer für die gewünschte Endfestigkeit erforderlichen Anzahl von Schichten auf einer ebenen Fläche abgelegt. Dann wird die so gebildete Schichtstruktur in eine Form gebracht und derart gepreßt, daß daraus die für das jeweilige Konstruktionsteil erforderliche Raumform entsteht. Das auf diese Art und Weise gebildete Formteil wird sodann in einen Autoklaven eingesetzt, in welchem das Kunstharz durch die Wärmebehandlung zunächst weiter plastifiziert wird, damit es die Fasern der Schichtstruktur allseitig umschließen und untereinander verbinden kann. Hiernach werden schließlich die Fasern durch die Wärmeaushärtung des Kunstharzes innerhalb der Schichtstruktur gegeneinander festgelegt.

Es liegt auf der Hand, daß diese bekannte Herstellungsart von Konstruktionsteilen nur für Schalenkörper geeignet ist, die relativ einfache Krümmungsformen aufweisen und darüber hinaus eine relativ dicke Schichtstruktur haben. Nur in solchen Fällen kann nämlich vermieden werden, daß beim Preßumformen der ebenen Schichtstruktur zu einem gekrümmten Schalenkörper eine unerwünschte Richtungslagenänderung der Verstärkungsfasern innerhalb der Konstruktionsteile eintritt.

Abgesehen davon bedingt die bekannte Herstellungsart für solche Konstruktionsteile ein arbeits- und zeitaufwendiges Vorgehen.

Damit einwandfreie Endprodukte mit hoher Produktivität hergestellt werden können, ist es wichtig, Möglichkeiten zu nutzen, nach denen Konstruktionsteile mit komplexer Krümmung bis zur endgültigen Form ihrer Schichtstruktur in inkrementaler Weise hergestellt bzw. schrittweise aufgebaut und gebildet werden können, und zwar unter Benutzung von Bandmaterialstreifen, welche unmittelbar auf eine die Endform des Konstruktionsteiles vorgebende Form verlegt werden können. Hierbei ist es auch wichtig, daß die aus einem Verbundwerkstoff bestehenden Bandmaterialstreifen eine Behandlung erfahren, bei der deren Verstärkungsfasern in der für den fertigen Gegenstand gewünschten, endgültigen Richtung ausgerichtet werden und auch bleiben. Wenn dann die Schichtstruktur die jeweils gewünschte oder erforderliche Dicke aufweist, kann das Kunstharz des Verbundwerkstoffes ohne wei tere Zwischenschritte, und zwar insbesondere ohne zusätzliche Formgebungs-Arbeitsgänge, im Autoklaven - auf der die Schichtstruktur tragenden Verlegeform - ausgehärtet werden.

Zur Bildung der Verbundwerkstoff-Schichtstrukturen werden in besonders vorteilhafter Weise sogenannte Mehrachsen-Bandlegemaschinen eingesetzt, mit denen die aus dem Verbundwerkstoff bestehenden Bandmaterialstreifen in ausgewählten und zueinander im wesentlichen parallelen Bahnen als eine konforme Bandmaterialschicht auf eine Form aufbringbar sind, wobei dann dieser ersten Bandmaterialschicht zur Bildung der Schichtstruktur auf der Form weitere und gleichartige Bandmaterialschichten überlagert werden. Diese Mehrachsen-Bandlegemaschine arbeitet dabei mit einem antriebsgesteuerten Bandlegekopf, der in Abhängigkeit von ihm zugeführten Steuerungs- und Regelungssignalen in mehreren - bspw. fünf- Achsen bewegbar ist. Sie hat einen Maschinenbefehle aufnehmenden Steuer- und Regelprozessor, mit dessen Hilfe die Steuerungs- und Regelungssignale für den Bandlegekopf erzeugbar sind. Auch weist sie eine Vorrichtung auf, mittels der die Maschinenbefehle für eine definierte, natürliche Verlegebahn jedes einzelnen Bandmaterialstreifens auf der konturierten Fläche der Verlegeform als eine Abbildung dieser konturierten Fläche sowie der Inkrementalschrittlänge und der Breite des Bandmaterialstreifens erzeugt werden können.

Beim Einsatz einer solchen Mehrachsen-Bandlegemaschine werden dabei Bandmaterialstreifen aus Verbundwerkstoff verarbeitet, die eine Breite zwischen etwa 25,4 mm (1") und etwa 152,4 mm (6") haben und dabei eine Dicke von etwa 1,905 mm (0,075") aufweisen.

Da die Bandmaterialstreifen aus Verbundwerkstoff so aufgebaut sind, daß sie sich bei ihrer Verarbeitung, also insbesondere beim Verlegen mit Hilfe der Mehrachsen-Bandlegemaschine, nicht wesentlich dehnen oder strecken dürfen, besteht die eigentliche Schwierigkeit darin, daß sie in einer Weise auf die Verlegeflächen der Formen aufgebracht werden, bei der sich an ihren Kanten keine Buckel bilden und bei der sich innerhalb einer gegebenen Bandmaterialschicht der Schichtstruktur keine Überlappung mit einem benachbarten Bandmaterialstreifen einstellt, aber auch zu große Abstände zwischen einander benachbarten Bandmaterialstreifen vermieden werden.

Die Buckelbildung oder Kräuselung an den Bandkanten ist deshalb besonders schädlich, weil dadurch eine Zone örtlicher Schwächung in der Weise entsteht, daß das ausgehärtete Kunststoff-Grundmaterial fließen und dann die Scherwirkung der geknickten Fasern aushalten muß, wenn diese sich unter Belastung strecken und auf die Zugkräfte auszurichten versuchen. Mit anderen Worten: Die Schichtstruktur wird geschwächt, wenn eine zu ihr gehörende Bandmaterialschicht Buckel oder Kräuselungen enthält und daher nicht ihren Teil der berechneten Belastung aufzunehmen vermag.

Zur Vermeidung solcher Unzulänglichkeiten wird jede gegebene Verlegefläche einer Form zunächst einmal relativ zum internen Koordinatensystem der Mehrachsen-Bandwickelmaschine mathematisch definiert. Der Bandmaterialstreifen wird dabei unter Beachtung der vom Konstrukteur für die Festigkeit des jeweiligen Formteiles vorgeschriebenen Ausrichtung und Lage der Faser entlang einer vorprogrammierten, natürlichen Verlegebahn auf die konturierte Fläche der Form so aufgebracht, daß kein ungleichmäßiger Zug auf die Bandkanten einwirken kann. Das hat wiederum zur Folge, daß die Buckelbildung bzw. Kräuselung an den Kanten der Bandmaterialstreifen vermieden wird.

Die natürliche Verlegebahn kann für ein Teilprogramm schnell und exakt generiert werden, weil die Mehrachsen-Bandlegemaschine mit einer mathematischen Abbildung der komplex konturierten wirklichen Verlegefläche der Verlegeform arbeitet. Mit dieser mathematischen Abbildung werden Formkontur und Umrißlinien der Verlegefläche als unterschiedliche Achshöhen in Z-Richtung bzw. als Abweichungen von einer Kontrollebene definiert, die in zweckmäßige X-Y-Abschnitte aufgeteilt ist.

Da beim Betrieb der bekannten Mehrachsen-Bandlegemaschine deren Bandlegekopf bewegt bzw. verfahren wird, sind die zur Kontrollebene der Mehrachsen-Bandlegemaschine gehörenden X-Y-Abschnitte nicht zwangsläufig auf die tatsächlich gegebenen und für den Raumbereich der Verlegefläche an der Verlegeform zutreffenden Koordinaten bezogen, sondern vielmehr lediglich auf das interne Koordinatensystem der Bandlegemaschine selbst.

Es kann daher vorkommen, daß die konkrete bzw. wirkliche Verlegefläche der Verlegeform nicht exakt auf das innere Koordinatensystem der Bandlegemaschine ausgerichtet ist und dadurch die ordnungsgemäße Herstellung der Schichtstruktur nachhaltig beeinträchtigt wird. Wenn nämlich die tatsächlich gegebene Verlegefläche nicht genau in der für die mathematische Abbildung zutreffenden Weise auf das innere Koordinatensystem der Bandlegemaschine ausgerichtet ist, stellen sich zwangsläufig Abweichungen vom gewünschten Arbeitsergebnis ein.

Diese Abweichungen kommen zustande, weil die Schichtstruktur für jedes einzelne Konstruktionsteil bzw. jeden Schalenkörper auf der Verlegefläche einer Verlegeform gebildet werden muß, die dann zum Zwecke der Aushärtung mit der darauf abgelegten Schichtstruktur aus dem Bereich der Mehrachsen-Bandlegemaschine gebracht und in den Autoklaven gefahren wird.

Damit aber der Produktionsprozeß für weitere Konstruktionsteile bzw. Schalenkörper fortgesetzt werden kann, muß so schnell wie möglich die nächste Verlegeform in den Bereich der Mehrachsen-Bandlegemaschine gebracht und darin ausgerichtet werden.

Es hat sich jedoch gezeigt, daß es sehr zeitaufwendig ist, eine Verlegeform, deren Verlegefläche eine Größenordnung hat, wie sie bspw. für die Bildung der Flügelverkleidung eines Flugzeug-Tragflügels erforderlich ist, manuell mit der erforderlichen höchsten Genauigkeit in der Bandlegemaschine auszurichten.

Lediglich die annähernde Ausrichtung der konkreten bzw. wirklichen Verlegefläche der Verlegeform auf das innere Koordinatensystem der Bandlegemaschine kann manuell mit relativ geringem Zeitaufwand durchgeführt werden. Das anschließend notwendige, exakte Ausrichten von Hand erfordert hingegen einen ganz breträchtlichen Zeitaufwand und dementsprechend einen hohen Produktionsausfall, weil währenddessen die Bandlegemaschine nicht produktiv betrieben werden kann.

Der Erfindung liegt daher die Aufgabe zugrunde, ein Verfahren der eingangs näher bezeichneten Art zum Ausrichten einer konkreten bzw. wirklichen Fläche, z.B. einer Form, eines Werkstückes oder eines Werkzeuges auf ein internes Koordi natensystem einer sich hierzu relativ bewegenden Maschine anzugeben, das schnell und präzise arbeitet und mit dessen Hilfe die Stillstandszeiten bzw. der Produktionsausfall der Maschine minimiert werden kann.

Gelöst wird diese Aufgabe dadurch, daß auf der konkreten bzw. wirklichen Fläche, z.B. der Form, die Koordinaten von mehreren wirklichen und auf das interne Koordinatensystem bezogenen konkreten Punkten durch Messen aufgenommen und erfaßt werden; daß die Koordinaten der zur mathematischen Abbildung der konkreten bzw. wirklichen Fläche gehörenden und auf das interne Koordinatensystem bezogenen, jeweils zutreffenden Punkte aufgenommen und erfaßt werden; daß anhand der konkreten bzw. wirklichen Flächenpunkte und anhand der Flächenabbildungspunkte eine Transformationsfunktion generiert wird, die die Ausrichtung der konkreten bzw. wirklichen Fläche auf die mathematische Abbildung dieser wirklichen Fläche definiert; daß mit der Transformationsfunktion die Punkte transformiert werden, was wiederum zur Folge hat, daß dadurch mehrere transformierte Punkte generiert werden, mit denen die von der Maschine im Hinblick auf die mathematische Flächenabbildung der wirklichen Fläche zu vollziehenden Bewegungsabläufe der Maschine definiert sind; und daß die programmierten Punkte durch die transformierten Punkte ersetzt werden, welche für die Maschine eine Bewegungsbahn definieren, die auf die konkrete bzw. wirkliche Fläche ausgerichtet ist.

Nach der Erfindung ist in weiterer Ausgestaltung vorgesehen, daß zusätzlich zu dem für das messende Aufnehmen und Erfassen der Koordinaten der mehreren wirklichen Punkte vorgesehenen Verfahrensschritt noch vorgesehen ist, daß für jeden der wirklichen und tatsächlichen mehreren Punkte der Abstand zum Ursprung des internen Koordinatensystems gemessen und erfaßt wird.

Zusätzlich zu dem das Messen bewirkenden Verfahrensschritt ist erfindungsgemäß noch vorgesehen, daß ein zur Maschine gehörendes Konstruktionselement relativ zu dem wirklichen Punkt der konkreten bzw. wirklichen Fläche solange bewegt und verfahren wird, bis es im wirklichen Punkt auf die konkrete bzw. wirkliche Fläche auftrifft und daß dabei die Koordinaten dieses wirklichen Flächenpunktes mit den Positionierungskoordinaten des Maschinenelementes bestimmt werden.

Zusätzlich zu dem das Verfahren des Maschinenelementes bewirkenden Verfahrensschritt ist darüber hinaus erfindungsgemäß auch noch vorgesehen, daß das Maschinenelement in der Horizontalrichtung solange verfahren wird, bis es in der Horizontalebene auf den wirklichen Flächenpunkt ausgerichtet ist.

Nach der Erfindung ist es darüber hinaus aber auch noch wichtig, daß das Maschinenelement in der Vertikalrichtung solange bewegt und verfahren wird, bis es auf den wirklichen Flächenpunkt auftrifft.

Das erfindungsgemäße Verfahren zum Ausrichten einer konkreten bzw. wirklichen Fläche auf eine für sie zutreffende, mathematische Flächenabbildung, die zum Generieren eines die Bewegungsabläufe der Maschine im Hinblick auf die wirkliche Fläche steuernden und regelnden Teilprogrammes verwendet wird, ist erfindungsgemäß weiterhin dadurch gekennzeichnet, daß drei zur wirklichen bzw. konkreten Fläche gehörende wirkliche Flächenpunkte ausgewählt bzw. gemessen werden, daß einer dieser wirklichen Flächenpunkte als Ursprung oder Ursprungspunkt festgelegt wird, daß ein erster Vektor berechnet wird und von dem Ursprung bzw. Ursprungspunkt aus zu einem zweiten der vorerwähnten drei wirklichen Flächenpunkte führt, daß ein zweiter Vektor berechnet wird, welcher vom Ursprung bzw. Ursprungspunkt aus zu dem dritten der vorerwähnten drei wirklichen Flächenpunkte führt, daß aus dem ersten Vektor und dem zweiten Vektor ein orthonormaler Einheitsvektor-Satz der Einheitsvektoren $U_1$, $U_2$, $U_3$ gebildet wird, daß mindestens drei den konkreten bzw. wirklichen Flächenpunkten entsprechende Flächenabbildungspunkte der Flächenabbildung aus dem angeführten Teilprogramm ausgewählt bzw. aufgenommen und erfaßt werden, daß einer dieser Flächenabbildungspunkte als Flächenabbildungsursprung festgelegt wird, daß von dem Flächenabbildungsursprung aus zu einem zweiten dieser Flächenabbildungspunkte ein dritter Vektor berechnet wird, daß von dem Flächenabbildungsursprung aus zu einem dritten dieser Flächenabbildungspunkte ein vierter Vektor berechnet wird, daß aus dem dritten Vektor und dem vierten Vektor ein orthonormaler Einheitsvektorsatz der Einheitsvektoren $W_1$, $W_2$, $W_3$ gebildet wird, daß ein Transformationsvektor $T_1$, $T_2$, $T_3$ berechnet wird, mit dem die Einheitsvektoren $U_1$, $U_2$, $U_3$ zu den Einheitsvektoren $W_1$, $W_2$,

$W_3$ gedreht werden, daß ein Transformationspunkt aus dem vorerwähnten Transformationsvektor und aus einem Flächenabbildungspunkt des Teilprogrammes generiert wird, und daß der programmierte Punkt durch den Transformationspunkt ersetzt wird, mit der Folge, daß die Bewegungsabläufe der Maschine vom Teilprogramm in Ausrichtung auf die konkrete bzw. wirkliche Fläche gesteuert und geregelt werden.

Zusätzlich zu dem die Generierung eines Transformationspunktes bewirkenden Verfahrensschritt ist es erfindungsgemäß aber auch noch wichtig, daß der Flächenabbildungspunkt vom Flächenabbildungsursprung aus zum Ursprungspunkt der konkreten bzw. wirklichen Fläche hin verschoben wird.

Obwohl die erfindungsgemäße Verfahrensart sich ganz allgemein zum Ausrichten einer konkreten bzw. wirklichen Fläche auf ein internes Koordinatensystem einer sich relativ zu dieser Fläche bewegenden Maschine eignet, wird sie bevorzugt in Verbindung mit einer Mehrachsen-Bandlegemaschine eingesetzt, durch die ein aus einem Verbundwerkstoff bestehender Bandmaterialstreifen in ausgewählten und zueinander im wesentlichen parallelen Bahnen als eine konforme Bandmaterialschicht auf die Verlegefläche einer Form aufgebracht werden kann und dann dieser ersten Bandmaterialschicht zur Bildung einer Schichtstruktur auf der Form weitere und gleichartige Bandmaterialschichten überlagert werden.

Zu einer solchen Mehrachsen-Bandlegemaschine gehört dabei ein antriebsgesteuerter Bandlegekopf, der in Abhängigkeit von ihm zugeführten Steuerungs- und Regelungssignalen in mehreren Achsen bewegbar ist. Mittels eines Maschinenbefehle aufnehmenden Steuer- und Regelprozessors werden die Steuerungs- und Regelungssignale für den Bandlegekopf erzeugt. Durch die Maschinenbefehle wird dann eine Vorrichtung beeinflußt, die eine definierte, natürliche Verlegebahn jedes einzelnen Bandmaterialstreifens auf der konturierten Fläche der Verlegeform als eine Abbildung dieser konturierten Fläche sowie der Inkrementalschrittlänge und der Breite des Bandmaterialstreifens erzeugt.

Die natürlichen Verlegebahnen für jeden einzelnen Bandmaterialstreifen werden mit Hilfe von Flächen definierenden sowie den Prozessor eines Verlegebahngenerators zugeführten orthogonalen Koordinaten generiert, welche wiederum die Verlegefläche der Verlegeform als eine mathematische Abbildung definieren, welche der Prozessor des Verlegebahngenerators zusammen mit Systemkriterien, bspw. Einschränkungen bezüglich der natürlichen Verlegebahn verarbeitet und daraus die Verlegebahndaten generiert.

Die Verlegebahndaten werden mit anderen Maschinenbefehlen zu einem Teilprogramm zusammengefaßt und dann zur steuernden und regelnden Beeinflussung der Bewegungsabläufe für den Bandlegekopf entlang den Verlegebahnen benutzt.

Das Teilprogramm durchläuft eine Transformationsfunktion und wird dann zum Steuern und Regeln der Bewegungsabläufe für den Bandlegekopf verwendet.

Die Transformationsfunktion bewirkt eine Übersetzung und Drehung der zum Teilprogramm gehörenden sowie auf die mathematische Abbildung bezogenen geometrischen Daten in einer Ausrichtung auf die konkrete bzw. tatsächlich vorhandene Verlegefläche der Verlegeform.

Dieser Transformations- bzw. Umformungsvorgang kann einesteils für das gesamte Programm durchgeführt werden, wobei dann ein neues und auf die wirkliche Ausrichtung der Verlegeform bezogenes Programm entsteht. Er kann aber auch von Fall zu Fall dann durchgeführt werden, wenn nur ein Teilprogramm verarbeitet wird.

Zur Ableitung der Transformationsfunktion werden mehrere Flächenpunkte der Verlegeform als Bezugspunkte gewählt und deren Koordinaten werden im Hinblick auf das interne Koordinatensystem der Bandlegemaschine gemessen. Zum Vergleich werden dann auch die entsprechenden Punkte der mathematischen Flächenabbildung ausgewählt. Vorzugsweise wird dabei so vorgegangen, daß drei Punkte gewählt werden, die für jede Fläche eine Ebene definieren, und daß zur Festlegung der für die Ausrichtung der repräsentativen Ebene auf die tatsächlich gegebene Ebene erforderlichen Drehung bzw. Rotation eine Transformationsmatrix abgeleitet und entwickelt wird.

Die Transformationsmatrix entsteht dadurch, daß zwei orthonormale und für die Ausrichtung einer jeden Fläche stehende Einheitsvektor-Triaden gebildet werden, und daß eine Matrixgleichung einer Triade als Funktion der anderen Triade berechnet und gelöst wird.

Das Resultat aus der Matrixgleichung ist dann das Transformations-Matrixsystem für die Ausrichtung der einen orthonormalen Triade, d.h., für die Flächenabbildung auf die andere orthonormale Triade und die tatsächlich gegebene Fläche. Die Punkte, welche im Teilprogramm auf die Flächenabbildung bezogen sind, werden durch die Einwirkung der Transformationsmatrix auf die tatsächlich gegebene Fläche ausgerichtet.

Ein Punkt, der zum Teilprogramm gehört, ist auf den Ursprung des internen Koordinatensystems der Bandlegemaschine bezogen. Dieser Punkt muß deshalb zunächst einmal durch einen Umformungsvorgang zum Ursprung der repräsentativen Triade in Beziehung gesetzt werden. Er muß gedreht werden und muß dann wieder auf den Koordinatenursprung der Bandlegemaschine zurückgeführt werden.

Dies wird dadurch erreicht, daß ein als Ursprung der Einheitsvektor-Triade verwendeter Punkt subtrahiert wird, daß die Drehung oder die Matrixtransformation vollzogen wird, und daß dieser Punkt dann wieder

addiert wird.

Zur Durchführung des erfindungsgemäßen Verfahrens zum Ausrichten einer konkreten bzw. wirklichen Fläche auf ein internes Koordinatensystem einer sich zu ihr relativ bewegenden Maschine wird ein Positionierungssystem bzw. eine Positionierungsvorrichtung benutzt, welches bzw. welche es ermöglicht, die ausgewählten Punkte zwecks Feststellung der tatsächlich vorliegenden Ausrichtung mit einem Meßsondensystem zu messen, welches bei der Ausbildung der Maschine als Mehrachsen-Bandlegemaschine am Bandlegekopf angebracht ist.

Erfindungsgemäß gehören zu diesem Meßsondensystem eine Vorrichtung, die einen, z.B. vertikalen, sichtbaren Lichtstrahl erzeugt,
eine am Bandlegekopf sitzende Vorrichtung, mittels der auf der Verlegefläche der Verlegeform ein Führungslichtpunkt erzeugbar ist,
eine Vorrichtung, mit deren Hilfe die Bewegung des Bandlegekopfes steuerbar und regelbar ist, bis der Führungslichtpunkt und der Bezugspunkt der Verlegefläche in ihrer Sollposition aufeinander ausgerichtet sind,
und eine Vorrichtung, mit deren Hilfe im Koinzidenzpunkt die Position des Bandlegekopfes als Verlegeflächen-Bezugsposition für mindestens zwei der drei Koordinatenachsen aufzunehmen und zu speichern sind.

Bei der Lichtstrahl-Vorrichtung kann es sich dabei erfindungsgemäß vorzugsweise um ein Lasersystem handeln. Die Achse des Lichtstrahles kann nach der Erfindung parallel zur dritten Koordinatenachse ausgerichtet sein.

Der Lichtstrahl kann zu einem ganz schmalen Führungsstrahl gebündelt werden, mit dessen Hilfe der Bandlegekopf schrittweise bewegbar ist, damit er in eine Position direkt über einen der Bezugspunkte gebracht werden kann.

Erfindungsgemäß gehört zum Meßsondensystem auch noch eine längliche Meßsonde. Diese kann einerseits durch das Bewegen oder Verfahren des Bandlegekopfes bis zum Auftreffen auf einen gewählten Punkt der Verlegefläche abgesenkt werden, wobei sie ihr Auftreffen mit einem Signal an einen Regler meldet. Andererseits ist die Meßsonde aber auch noch so vorgesehen bzw. ausgeführt, daß sie relativ zum Bandlegekopf zwecks Durchführung von Messungen ausgefahren und auch wieder zurückgezogen werden kann.

Der Bandlegekopf weist für die Positions-Rückmeldung eine Reihe von Sensoren oder Meßfühler auf, welche jeweils die auf das interne Koordinatensystem bezogene Position des Bandlegekopfes aufnehmen und erfassen.

Sobald mit Hilfe des Meßsondensystems ein repräsentativer Punkt auf der Verlegefläche der Verlegeform festgelegt worden ist, können mit den Positions-Rückmeldungssensoren auch die Koordinaten dieses Meßpunktes bestimmt werden. Bei der X-Y-Z-Position des Bezugspunktes handelt es sich dabei um die X-Y-Z-Position des Bandlegekopfes zum Zeitpunkt des Auftreffens der Meßsonde zuzüglich einem Satz von Verschiebungsgrößen für die außermittige Anordnung des Meßsondensystems am Bandlegekopf. Hieraus ergibt sich, daß die reprä sentative Flächenpunkten der Verlegefläche dann exakt und präzise gemessen sowie für die Ableitung der Transformationsmatrix gespeichert werden können, wenn das Programm arbeitet.

Die Erfindung wird nachstehend an in der Zeichnung dargestellten Ausführungsbeispielen näher erläutert. Dabei zeigen

Figur 1 in Stirnansicht eine Mehrachsen-Bandlegemaschine mit einem an einer Brückenkonstruktion aufgehängten Bandlegekopf zum Aufbringen von Bandmaterialstreifen aus Verbundwerkstoff auf die komplex gekrümmte Verlegefläche einer Verlegeform,

Figur 2 in größerem Maßstab den Bandlegekopf in seiner Frontansicht,

Figur 3 die rechte Seite des in Fig. 1 gezeigten Bandlegekopfes, wobei das ausfahrbare Meßsondensystem in gestrichelten Linien angedeutet ist,

Figur 4 die linke Seite des Bandlegekopfes nach Fig. 1, wobei die von rechts nach links führende Verlegebewegung desselben angedeutet ist,

Figur 5 eine vergrößerte Ausschnittdarstellung aus den Fig. 3 und 4, wobei die Anordnung und Ausbildung des Meßsondensystems zu sehen ist,

Figur 6 die Seitenansicht des in Fig. 5 dargestellten Ausschnittbereichs,

Figur 7 eine zum Teil im Schnitt wiedergegebene Ansicht des Meßsondensystems entsprechend der Linie 7-7 in Fig. 5,

Figur 8 ein als Blockschaltbild wiedergegebenes, ausführliches Funktionsdiagramm des Steuerungs- und Regelungssystems der in Fig. 1 dargestellten Bandlegemaschine,

Figur 9 die Darstellung der Flächenabbildung und der Umfangsabwicklung eines Gegenstandes auf einer konturierten Fläche einer Verlegeform für die in Fig. 1 gezeigte Bandlegemaschine,

Figur 10 eine räumliche Darstellung des Verfahrens für das Ausrichten der in Fig. 9 gezeigten Flächenabbildung auf die konkrete bzw. wirkliche Fläche der in Fig. 1 nur andeutungsweise gezeigten Verlegeform,

Figur 11 ein Vektordiagramm, welches die Bildung von Vektoren für zwei orthonormale Systeme auf der Grundlage der in Fig. 10 für die konkrete bzw. wirkliche Verlegefläche und für die Flächenabbildung wiedergegebenen Punkte angibt,

Figur 12 ein Vektordiagramm für eine Triade von Einheitsvektoren als erstes orthonormales System aus den Vektoren der konkreten bzw. wirklichen Fläche nach Fig. 11,

Figur 13 ein Vektordiagramm für eine Triade von Einheitsvektoren als zweites orthonormales System aus den in Fig. 11 wiedergegebenen Vektoren der Flächenabbildung,

Figur 14 ein Funktionsablaufdiagramm des aus den Fig. 5 bis 7 erkennbaren Ausrichtverfahrens zum Messen der tatsächlich vorhandenen Punkte auf der in Fig. 10 dargestellten Verlegefläche und

Figur 15 ein Funktionsablaufdiagramm des Verfahrens für die Verwendung der wirklichen Punkte und der Flächenabbildungspunkte zum Transformieren der geometrischen Daten aus der Flächenabbildung in die tatsächlich vorhandene Fläche.

In Fig. 1 der Zeichnung ist eine Bandlegemaschine dargestellt, die einen Bandlegekopf 20 aufweist. Dabei ist dieser Bandlegekopf 20 einer Brückenaufhängung derart zugeordnet, daß er mit einem z.B. von rechts nach links führenden Bewegungsablauf einen aus Verbundwerkstoff bestehenden Bandmaterialstreifen auf die nach oben gerichtete, komplex gekrümmte Verlegefläche einer Verlegeform 22 aufbringen kann.

Der Bandlegekopf 20 ist konstruktiv so ausgeführt, daß er in fünf Achsen bewegt und verfahren werden kann. Es handelt sich dabei um drei Linearachsen X, Y und Z sowie um zwei Drehachsen A und C.

Während es sich bei der Bewegung um die Drehachse A um eine parallel zur X-Y-Ebene - horizontal - durch das Zentrum des Bandlegekopfes 20 führende Drehbewegung handelt, ist die Bewegung um die Drehachse C als eine Drehbewegung um die -vertikale - Z-Achse aufzufassen.

Die Brückenaufhängung besteht aus zwei zueinander im Parallelabstand angeordneten Schienen 24 und aus der darauf verfahrbar angeordneten Querführungsbahn 28.

Die zueinander im Parallelabstand angeordneten beiden Schienen 24 sind auf geeigneten Säulen 26 aufgeständert oder ruhen derart auf anderen geeigneten Unterstützungen, daß die Querführungsbahn 28 sich auf ihnen senkrecht zur Papierebene der Fig. 1 bewegen läßt. Die Bewegungsrichtung der Querführungsbahn 28 auf den Schienen 24 entspricht dabei der Bewegung des Bandlegekopfes 20 in Richtung der X-Achse.

Die Querführungsbahn 28 wird in Richtung der X-Achse durch einen Zahnstangenantrieb bewirkt (welcher in der Zeichnung nicht dargestellt ist), dessen Zahnritzel auf die Enden der an der Querführungsbahn 28 angeordneten Wellen 30 und 31 aufgesetzt sind. Diese Wellen 30 und 31 werden jeweils von den Servomotoren 32 und 33 spielfrei angetrieben, welche in der Mitte der Querführungsbahn 28 montiert sind.

Die jeweilige Position des Bandlegekopfes 20 in Richtung der X-Achse wird von Positions-Rückmeldungssensoren erfaßt und gemeldet, welche zwar nicht dargestellt, jedoch den Servomotoren 32 und 33 zugeordnet sind. Sie generieren Rückmeldungssignale, welche der tatsächlichen Position des Legekopfes 20 in Richtung der X-Achse entsprechen. Für die seitwärts gerichtete, also parallel zur Papierebene der Fig. 1 gerichtete Bewegung des Legekopfes 20, d.h. für dessen Bewegung in Richtung der Y-Achse, ist gemäß Fig. 1 ein Quersupport 36 vorgesehen, welcher auf der Vorderseite der Querführungsbahn 28 so angeordnet und montiert ist, daß er auf Gleitbahnen 38 bewegt und verfahren werden kann.

Der Quersupport 36 wird für seine über die Gleitbahnen 38 führende Bewegung von zwei einander benachbarten Servomotoren 40 und 41 angetrieben, deren - nicht dargestellte- Zahnritzel spielfrei in die zueiander entgegengesetzt ausge richteten Zahnflanken einer Zahnstange 42 eingreifen, welche oberhalb der unteren Gleitbahn 38 liegt und sich über den größten Teil der Länge der Querführungsbahn 28 erstreckt.

Die den Servomotoren 40 und 41 zugeordneten Drehwinkelmelder oder andere Rückmeldungssensoren generieren Signale, welche der jeweils tatsächlichen Position des Bandlegekopfes 20 in Richtung der Y-Achse entsprechen.

Der Bandlegekopf ist mit dem unteren Ende einer Hohlwelle 44 verbunden, die wiederum über einen Hauptschlitten 46 am Quersupport 36 aufgehängt ist. Hohlwelle 44 und Hauptschlitten 46 sind dabei derart am Quersupport 36 angeordnet und montiert, daß sie sich relativ zu diesen in Vertikalrichtung gleitend bewegen können. Eine Drehscheibe an der Hohlwelle 44 wird von einem Servo- bzw. Stellmotor 47 über ein spielfreies Zahnradgetriebe 48 angetrieben und in Umdrehung versetzt. Sie sorgt dafür, daß über die

Hohlwelle 44 der Bandlegekopf 20 eine Drehbewegung um eine Vertikalachse ausführt, welche die C-Achse bildet.

Auch der Hauptschlitten ist derart am Quersupport angeordnet, daß er über einen Spindelantrieb 49 von einem Servo- bzw. Stellmotor angetrieben sowie in Vertikalrichtung bewegt bzw. verfahren werden kann. Damit ist für den Bandlegekopf 20 auch die Bewegung in Richtung der Z-Achse gewährleistet.

Die jeweils der Z-Achse und der C-Achse entsprechende, tatsächliche Position des Bandlegekopfes 20 wird von Positionsmelde-Sensoren, bspw. von Drehwinkelmeldern oder dergleichen, den Servo- bzw. Stellmotoren 47 und 49 gemeldet.

Der Bewegungsvorgang des Bandlegekopfes 20 um die fünfte Achse ist eine Drehbewegung um die A-Achse. Sie läßt sich am einfachsten anhand der Fig. 2, 3 und 4 der Zeichnung erläutern. Der hierin wiedergegebene, zweiteilige Gehäuserahmen des Bandlegekopfes 20 besteht aus einem Aufhängerahmen 50 und einem Sattelrahmen 52, welcher die Verlegemechanik für die Bandmaterialstreifen aufzunehmen und zu halten hat. Der Aufhängerahmen 50 hat eine horizontal angeordnete Montageplatte 53, mit deren Hilfe er an der Hohlwelle 44 befestigt wird. Er weist darüber hinaus eine breite, vertikale Spannplatte 54 auf, die mit der Montageplatte 53 verklammert ist, und zwar auf ihrer Vorderseite unter Verwendung von Haltewinkel 55 und auf ihrer Rückseite durch Versteifungsbleche 56.

Die auf der Vorderseite der Spannplatte 54 vorhandene Präzisionsführungen 58 sind um die A-Achse des Bandlegekopfes 20 kreisbogenförmig bzw. konzentrisch gekrümmt, während die A-Achse wiederum die Bandlegerollen 60 tangiert, wenn diese sich in ihrer Verlegeposition befinden. Die A-Achse steht darüber hinaus senkrecht auf der Papierebene der Fig. 2, in welcher sie als eine Linie dargestellt ist.

Die zu dem sattelartigen Rahmen 52 des Legekopfes 20 gehörende Drehscheibe 62 ist auf den Führungsbahnen 58 des Aufhängerahmens 50 derart angeordnet, daß sie sich um die A-Achse verlagern bzw. drehen kann. Dabei wird die Drehscheibe 62 von einem Servo- bzw. Stellmotor und einem Getriebe 49 bewegt, wobei zwei (nicht dargestellte) Zahnritzel spielfrei in die einander entgegengesetzt ausgerichteten Zahnflanken einer auf der Antriebsfläche der Drehscheibe 62 angeordneten Zahnstange eingreifen.

Die am Aufhängerahmen 50 vorhandenen Präzisionsführungen 58 ermöglichen vorzugsweise eine von einem Mittelpunkt ausgehende und in beide Richtungen führende Drehbewegung über einen Winkel von 30° um die A-Achse.

Die Drehbewegung der im Quersupport 36 angeordneten Hohlwelle 44 ist für eine von einem Null-Bezugspunkt aus in beide Richtungen führende Winkelverstellung von 190° um die C-Achse ausgelegt.

Ein dem Servo- bzw. Stellmotor 64 zugeordneter Rückmeldungssensor, bspw. ein Drehwinkelmelder oder dergleichen, erzeugt ein Signal, welches der für die A-Achse jeweils entsprechenden, tatsächlich gegebenen Position des Bandlegekopfes 20 auf der A-Achse entspricht.

Für das Positionieren des Bandlegekopfes 20 gibt es ein internes Koordinatensystem der Bandlegemaschine, welches auf den Mittelpunkt der Bandlegerolle 60 bezogen ist. Der Koordinatenursprung für das interne Koordinatensystem ist beweglich gestaltet und kann aus diesem Grunde mit Präzision auch für Verlegeflächen bzw. Verlegeformen vieler unterschiedlicher Abmessungen und Größen eingesetzt und verwendet werden.

Die Rückmeldungssignale der Positionssensoren für die X-Achse, für die Y-Achse, für die Z-Achse, für die A-Achse und für die C-Achse werden zum Aufnehmen und Erfassen der auf den Mittelpunkt der Bandlegerollen 60 bezogenen Raumpositionen verwendet. Wenn diese Positionen den vorprogrammierten Positionen des in Fig. 1 angedeuteten Steuerungs- und Regelungssystems 35 angepaßt werden, dann kann damit der Bandlegekopf 20 zum Aufbringen von Bandmaterialstreifen auf die Verlegefläohe der Verlegeform 22 und damit zur Herstellung von Wicklungsschichten für Schichtstruktur-Gegenstände ordnungsgemäß bewegt und verfahren werden.

Zu dem sattelartigen Rahmen 52 des Bandlegekopfes 20 gehören auch die beiden zueinander im Abstand angeordneten Platten 63, welche jeweils an diesem sattelartigen Rahmen 52 befestigt sind.

Zwischen den Platten 63 ist im oberen, vorderen Ende des Rahmens 52, also gemäß Fig. 3 oben rechts, eine Bandzuführungsspule 70 montiert. Die einzelnen Windungen des auf dieser Bandzuführungsspule 70 befindlichen und aus Verbundwerkstoff bestehenden Bandmaterialstreifens 72 sind durch einen abziehbaren Papierstreifen 74 gegeneinander gesichert bzw. voneinander abgetrennt. Von der Bandzuführungsspule 70 aus werden der Bandmaterialstreifen 72 und der davon abziehbare Papierstreifen 74 so um eine Laufrolle 76 geführt, daß der abziehbare Papierstreifen 74 auf die Laufrolle 76 ausgerichtet ist. Von der Laufrolle 76 aus läuft der Bandmaterialstreifen 72 dann in gerader Linie nach unten zu den Verlegerollen 60 am unteren Ende des Legekopfes 20. Eine Führungsrolle 67 bewirkt, daß vor dem Einlaufen des Bandmaterialstreifens 72 in den Rückmeldungssensor 140 alle zwischen der Laufrolle 76 und zwischen den Legerollen 60 am Band entstandenen Unregelmäßigkeiten rückgängig gemacht werden, das Band also geglättet wird. Der adaptive Rückmeldungssensor 140 generiert ein Signal und meldet damit, daß der

Bandmaterialstreifen 72 und dessen Papierbeschichtung 74 auf die Verlegerollen 60 zentriert sind. Die Verlegerollen 60, welche gemäß Fig. 3 von links nach rechts bewegt werden, drücken auf den Bandmaterialstreifen 72, was wiederum zur Folge hat, daß dieser dann an der darunter befindlichen Verlegefläche der Verlegeform haftet und daß gewährleistet ist, daß der Bandmaterialstreifen 72 flach und eben auf der Verlegefläche aufliegt.

Wenn der Bandlegekopf 20 entlang einer Verlegebahn bewegt und verfahren wird, dann wird dadurch auf der Verlegefläche ein Bandmaterialstreifen abgelegt und zugleich der abziehbare Papierstreifen 74 von diesem abgezogen. Der abgezogene Papierstreifen 74 läuft dann schräg nach oben, wird als S-förmige Schleife zwischen eine Andruckrolle 78 und einer angetriebenen Rolle 80 hindurchgeführt und gelangt von dort aus dann auf eine Papierstreifenrolle 82 am hinteren Ende des Bandlegekopfes 20. Der abgezogene Paierstreifen 74 läuft aber erst dann auf die Aufwickelrolle 81 und durch die Papierstreifensensoren, wenn zuvor die Führungsrolle 71 alle Unregelmäßigkeiten des Papierbandes in einem Glättungsvorgang rückgängig gemacht hat. Ein fotoelektrischer Meßfühler 73, welcher mit einem Meßfühler ähnlicher Art für die Zuführungsrolle kombiniert ist, erzeugt Signale, die gewährleisten, daß dann, wenn eine neue Verlegebahn gestartet wird - ganz gleich wo die letzte Verlegebahn geendet hat - diese immer an der Kante der Rollen beginnt.

Die Bandzuführungsspule 70 und die Aufwickelrolle 81 für den Papierstreifen 74 werden jeweils von einem eigenen Drehmomentmotor 84 und 86 über Riemen angetrieben und dabei steuernd und regelnd derart beeinflußt, daß auf den Papierstreifen 74 immer eine vorgegebene Zugspannung einwirkt. Zu beiden Spulen 70 und 81 gehört jeweils ein federbelasteter Abtasthebel 88 und 90. Dieser Hebel 88 bzw. 90 mißt den sich verändernden Radius des auf den Spulen befindlichen Bandmaterialstreifens und wirkt anhand seiner Messungen derart steuernd und regelnd auf die Drehmomentmotoren ein, daß der vorgegebene Bandzug eingehalten wird.

Normalerweise wird der mit dem abziehbaren Papierstreifen 74 beschichtete und aus Verbundmaterial bestehende Bandmaterialstreifen 72 nur von dem sich nach dem Anheften des vorderen Bandendes über die Legefläche bewegenden Bandlegekopf von der Bandzuführungsspule 70 abgezogen. In anderen Fällen muß der Abziehvorgang am Anfang und am Ende einer jeden Verlegebahn wirksam werden, d.h. bevor sich zwischen dem aus Verbundwerkstoff bestehenden Bandmaterialstreifen 72 und der Verlegefläche eine genügend feste Haftung eingestellt hat. Dies ist dann der Fall, wenn der Papierstreifen am vorgeschnittenen Ende des aus Verbundwerkstoff bestehenden Bandmaterialstreifens nicht von diesem abgezogen werden kann.

Für die Zuführung des Bandmaterialstreifens wird der Antrieb auch dann wirksam, wenn zwischen dem Ende einer Verlegebahn und dem Beginn einer neuen Verlegebahn der Bandmaterialstreifen 72 im Bandlegekopf 20 neu angeordnet und ausgerichtet werden muß, d.h. dann, wenn die Verlegerollen 60 mit der Verlegefläche der Verlegeform 22 nicht in Berührungskontakt stehen.

In Fig. 3 der Zeichnung ist ein Meßsondensystem 75 mit seinen Umrißlinien so angedeutet, als sei es außermittig auf der Baugruppe 94 angeordnet und montiert.

Das Meßsondensystem 75, welches der Positionierungsbewegung des Bandlegekopfes 20 folgt, wird dann eingesetzt und verwendet, wenn auf der konkreten bzw. wirklichen Verlegefläche der Verlegeform 22 eine Reihe von Bezugspunkten gemessen und bestimmt werden soll. Mit der Position des Bandlegekopfes 20 ist auch die auf das interne Koordinatensystem der Fünfachsen-Bandlegemaschine bezogene Position des Meßsondensystems 75 festgelegt und bestimmt. Diese Position des Meßsondensy stems 75 wird mit der Verschiebungsgröße oder der Abweichung korrigiert, welche der Abweichung vom Mittelpunkt der Verlegerollen 60 entspricht.

Fig. 3 zeigt das Meßsondensystem 75 in seiner zurückgezogenen Position, in der es den Verlegevorgang der Bandlegemaschine nicht behindert und stört.

Das Meßsondensystem 75 wird normalerweise nur dann ausgefahren, wenn vor dem Herstellen eines Konstruktionsteiles bzw. Schalenkörpers eine relative Ausrichtung der die Verlegefläche aufweisenden Verlegeform 22 zur Bandlegemaschine durchgeführt werden muß. Bei allen anderen Betriebszuständen des Bandlegekopfes 20 wird hingegen das Meßsondensystem 75 in seine Ausgangsposition zurückgefahren. Zum Zuführantrieb für die Bandmaterialstreifen gehören die beiden Rollen 78 und 80, um die der abgezogene Papierstreifen 74 in einer S-förmigen Schleife zur Aufnahmespule 82 geführt wird. Die Rolle 80 wird, wie dies auch aus der linken Seite der Fig. 4 zu erkennen ist, von einem reversiblen oder drehrichtungsumkehrbaren Servomotor angetrieben. Dieser Servomotor ist auf der Außenseite des sattelartigen Rahmens 52 angeordnet und treibt die Rolle über ein 90°-Winkelgetriebe an. Bei der unteren Rolle 78 handelt es sich um eine Andruckrolle, die gemäß Fig. 3 auf, einen Kipphebel bzw. Steuerhebel 79 aufgesetzt ist, dessen anderes Ende mit einem doppelt wirkenden, kurzhubigen Druckluftzylinder 92 verbunden ist. Dieser Druckluftzylinder 92 wird derart angesteuert, daß er den zwischen den beiden Rollen

78 und 80 vorhandenen Spalt entweder öffnet oder schließt.

Wird für die Bandzuführung ein in beiden Richtungen wirkender Antrieb gewünscht, dann hat dies zur Folge, daß durch eine entsprechende Ansteuerung des Druckluftzylinders 92 der zwischen den Rollen 78 und 80 vorhandene Spalt geschlossen wird, und daß durch eine entsprechende Ansteuerung der Servomotor dazu gebracht wird, die dann zutreffende Drehrichtung zu bedienen. Dies mit der Folge, daß entweder der Drehmomentmotor 84 für die Aufnahmespule 82 oder der Drehmomentmotor 86 für die Zuführungsspule 70 entlastet wird, so daß die eine Spule Bandmaterialstreifen abgeben und die andere Spule Bandmaterial aufnehmen kann.

Mit der gleichen Systemanordnung, d.h. mit dem Schließen des zwischen den beiden Rollen 78 und 80 vorhandenen Spaltes, wird auch gebremst, und zwar immer dann, wenn der Bandlegekopf 20 hochgefahren wird, also zwischen diesem und der Verlegefläche der Verlegeform 22 kein Berührungskontakt mehr gegeben ist.

Wird durch eine entsprechende Ansteuerung des Druckluftzylinders 92 der Spalt zwischen den beiden Rollen 78 und 80 für den zwischen Anfang und Ende liegenden Teil des Verlegevorgangs geöffnet, dann hat dies zur Folge, daß der abziehbare Papierstreifen 74 weiterhin in die Umkehrschleife um die beiden Rollen 78 und 80 hineingezogen wird.

Wird, bspw. beim Aufbringen einer Verlegebahn, der Bandmaterialstreifen 72 im Hinblick auf den Bandlegekopf 20 nicht vom Antriebsmotor 80, sondern von einer anderen Vorrichtung transportiert, dann erzeugt die um die Antriebsrolle 80 geführte Schlinge des Papierstreifens 74 eine Reibung, die so groß ist, daß ein am Motor angebrachter Drehmelder die verlegte Bandmenge dadurch erfassen kann, daß er beim Antriebsmotor die Anzahl der Umdrehungen mißt und zählt, wobei es gleichgültig ist, ob der Motor zum Abziehen des Bandmaterialstreifens 72 von der Bandzuführungsspule 70 arbeitet oder nicht.

In den Fig. 5, 6 und 7 der Zeichnung ist das Meßsondensystem 75 in allen Einzelheiten dargestellt. Mit dessen Hilfe kann im Rückgriff auf das interne Koordinatensystem der Mehrachsen-Bandlegemaschine die jeweils zutreffende Lage der für die Verlegefläche der Verlegeform 22 konkreten Koordinaten bestimmt und festgelegt werden.

Das Meßsondensystem 75 ist durch einen Befestigungswinkel 200 am Gehäuse der Legerollen-Gruppe 94 gehalten. Auf dem oberen Schenkel des Befestigungswinkels ist dabei ein Hydraulikzylinder oder Druckluftzylinder 208 angeordnet und montiert, dem die Antriebsenergie über eine Rohrleitung 210 zugeführt wird. Ferner sitzt auf diesem Schenkel ein industrielles Lasersystem 212.

Der untere Schenkel des Befestigungswinkels 200 ist als Tisch ausgeführt, an dem ein im wesentlichen quadratischer Anschlagblock 204 dann anliegt, wenn das Meßsondensystem 75 ausgefahren ist, wie das die Fig. 5 und 6 erkennen lassen.

Der Anschlagblock 204 und der Kolben des Hydraulikzylinders 208 sind über einen SChaft 206 starr miteinander verbunden, damit der Anschlagsblock 204 nach unten gefahren werden kann, wenn der Zylinder 208 druckbeaufschlagt wird. Andererseits soll der Anschlagsblock 204 wieder zurückgezogen werden, wenn der Zylinder 208 vom Arbeitsdruck entlastet wird.

Die auf den Anschlagblock 204 aufgesetzte und im wesentlichen zylindrische Abdeckung 216 weist eine Kammer mit einer darin angeordneten Feder 218 auf, die mit ihrer Federkraft ein Meßsondenelement gegen die obere Fläche des Anschlagsblockes 204 drückt.

Das Meßsondenelement 214 hat im wesentlichen die Form eines länglichen Rohres. Zu ihm gehört ein Bolzen oder Stift 220, der zur Längsachse des Meßsondenelementes 214 im rechten Winkel angeordnet und ausgerichtet ist. Dieser Bolzen oder Stift 220 ist durch einen Schlitz 221 in das Gehäuse 216 hineingeführt und dabei derart angeordnet und ausgerichtet, daß er die Schalttaste 222 eines Endschalters 224 betätigen kann, wenn das Meßsondenelement 214 gegen die Federkraft der Feder 218 vertikal nach oben gedrückt wird.

Wird das Meßsondenelement 214 während eines Ausrichtungs-und Einstellungsvorgangs nicht benötigt, dann sorgt ein (nicht dargestelltes) für das Meßsondensystem bestimmtes Steuerungs-und Regelungssystem dafür, daß das Lasersystem ausgeschaltet und die Hydraulikflüssigkeit aus der Rohrleitung 210 und aus dem Zylinder 208 abgezogen wird. Hierdurch wird der Anschlagblock 204 zurückgezogen und das Meßsondenelement 214 vertikal nach oben bewegt. Es entfernt sich dadurch aus dem Bereich der Unterseite der Verlegerolle 60 und der von dieser bestrichenen Verlegebahn auf der komplex konturierten Verlegefläche der Verlegeform 22.

Soll hingegen vom Bediener der Mehrachsen-Bandlegemaschine die auf das interne Koordinatensystem derselben bezogene Position eines zur Verlegefläche der Verlegeform 22 gehörenden, konkreten bzw. wirklichen Punktes bestimmt und festgestellt werden, dann wird die Mechanik des Meßsondensystems vom zugehörigen Steuerungs- und Regelungssystem dadurch aktiviert, daß dieses den Laser 212 einschaltet. Der Laser 212 erzeugt einen hellen und eng gebündelten Lichtstrahl aus monochronem Licht. Dieser

Lichtstrahl kann vom Bediener bzw. Operator bei der Einstellung und Ausrichtung des Bandlegekopfes 20 als Führungsstrahl eingesetzt und verwendet werden. Der auf der Verlegefläche der Verlegeform 22 sichtbare, kleine Lichtpunkt kann vom Bediener bzw. Operator dann mit der Vertikalachse des Lasers 212 und dem Bandlegekopf 20 bewegt und verfahren werden.

Der helle und gebündelte Lichtstrahl, tritt bei der hier vorgesehenen Systemkonfiguration durch eine Öffnung 226 in d er Abdeckung 216 und wird durch das Zentrum der Feder 218 sowie die Bohrung des Meßsondenelementes 214 geführt. Er gelangt als ein heller Führungslichtpunkt auf die Verlegefläche der Verlegeform 22. Dabei kann vom Bediener bzw. Operator der Bandlegekopf 20 im Schleichgang oder Feingang verfahren werden, bis die Zentralachse der Meßsondenmechanik vertikal auf den Flächenpunkt ausgerichtet ist, dessen Koordinaten gemessen und damit bestimmt werden sollen. Das geschieht dann in der Weise, daß der Bandlegekopf 20 so lange bewegt und verfahren wird, bis der Lichtpunkt auf den zu messenden Punkt eingestellt worden ist sowie für den zutreffenden Flächenpunkt die genauen X-Y-Koordinaten angezeigt werden.

Die Druckbeaufschlagung des Zylinders 208 bewirkt,
- daß der Anschlagblock an die zum Befestigungswinkel 200 gehörende Tischfläche herangefahren wird;
- daß das Meßsondenelement 214 bis zur Unterkante der Bandlegerollen 60 und durch die Federkraft der Feder 218 in der voll ausgefahrenen Position gehalten wird;
- daß der Bandlegekopf 20 von dem für das Meßsondensystem zuständigen Steuerungs- und Regelungssystem in kleinen Einzelschritten und mit kleinen Unterbrechungen zwischen diesen Einzelschritten entlang der Z-Achse nach abwärts bewegt wird;
- daß dann, wenn das Meßsondenelement 214 die Verlegefläche der Verlegeform 22 wirklich berührt, der Stift oder Bolzen 220 sich nach oben bewegt, sowie die Schalttaste 222 des Endschalters 224 betätigt und damit das Auftreffen des Meßsondenelementes 214 auf die Verlegefläche meldet;
- und daß schließlich der Endschalter 224 ein Signal erzeugt, mit dem das Steuerungs- und Regelungssystem 35 zum Anzeigen der Position in der Z-Achse für den Auftreffpunkt veranlaßt wird.

Jetzt werden die für den zur Verlegefläche der Verlegeform 22 gehörenden wirklichen Punkt die Koordinaten X, Y und Z berechnet. Dabei wird folgendermaßen verfahren:
- Die von den Rückmeldungssensoren für die unveränderten X-Y-Z-Positionen gemeldeten Meßwerte werden gespeichert;
- die derart erhaltenen Meßwerte werden dadurch modifiziert, daß von ihnen vorgegebene Verschiebungsgrößen für die Achsen X, Y und Z subtrahiert werden, weil zum einen das Meßsondensystem 75 in der X-Y-Ebene gegenüber dem Zentrum der Bandlegerollen 60 exzentrisch angeordnet ist, und weil zum anderen das Meßsondensystem 75 bis unter die Unterkante der Bandlegerollen 60 ausgefahren ist.

Nach der Subtraktion der für das Meßsondensystem 75 bekannten Verschiebungsgrößen können die daraus erhaltenen Positionskoordinaten für diesen Punkt als die auf das interne Koordinatensystem der Bandlegemaschine bezogene wirkliche Position betrachtet werden.

Das Verfahren der Punktbestimmung kann fortgeführt werden, bis zur Festlegung der tatsächlichen Flächenausrichtung der Verlegefläche an der Verlegeform 22 genügend Punkte zur Verfügung stehen.

Wie am besten aus dem in Fig. 8 wiedergegebenen Blockdiagramm hervorgeht, werden die Bewegungsabläufe der Bandlegemaschine von dem in Fig. 1 dargestellten Steuerungs-und Regelungssystem 35 gesteuert und geregelt.

Der zum Steuerungs- und Regelungssystem 35 gehörende Regler 300 erzeugt elektrische Steuerungs- und Regelungssignale und enthält entsprechend der mit einem Teilprogramm definierten Position für die Positionierung des Bandlegekopfes 20 die Positions-Rückmeldungssignale und die adaptiven Rückmeldungssignale aufgeschaltet, wobei das Teilprogramm die für den Bandlegekopf 20 gewünschte Raumposition oder Sollposition definiert und mit den Positions-Rückmeldungssignalen die auf das Steuerungs- und Regelungssystem 300 bezogene Istposition vergleicht.

Die bei diesen Signalen gegebene Differenz wird in einem geschlossenen Regelkreis oder in einer Regelschleife so lange abgeglichen, bis die tatsächlich gegebene Position bzw. Istposition gleich der gewünschten Position bzw. Sollposition ist und damit der Bandmaterialstreifen exakt aufgebracht und verlegt werden kann.

Signale, die darauf hinweisen, daß die Istpositionen und die Sollpositionen voneinander abweichen, können einem nachgeschalteten Computer 302 zur Qualitätskontrolle zugeführt werden. Dieser Computer 302 kontrolliert dabei, ob der Bandmaterialstreifen korrekt und exakt aufgebracht worden ist. Er speichert die Resultate der jeweils zutreffenden Verlegebahn.

Bei dem Regler 300 handelt es sich um ein rechnergeführtes numerisches Steuerungssystem (CNC-System), welches in der Lage ist, ein extensives und detailliertes Teilprogramm in aufeinanderfolgenden Programmblöcken zu verarbeiten, wenn ihm die sequentiell generierten Steuerungs- und Regelungsprogrammblöcke periodisch zugeführt und aufgeschaltet werden.

Ein jeder dieser für die Steuerung und Regelung bestimmten Programmblöcke enthält einerseits ausführliche Bewegungs-und Steuerungsinformationen und andererseits standardisierte Steuerungs-Funktionsprogramme für die jeweilige Bandlegemaschine. Die Verarbeitung dieser Programmblöcke hat zur Folge, daß der tatsächlich gegebene Bewegungsablauf des Bandlegekopfes 20 der natürlichen Verlegebahn entspricht und demnach auch entsprechend der natürlichen Verlegebahn steuernd und regelnd beeinflußt wird.

Für dieses System ist der CNC-Regler 8200 der Firma Alan Bradley oder ein gleichwertiger CNC-Regler verwendet worden. Dieser kann derart programmiert werden, daß er die Bewegungsabläufe und die Steuerungsabläufe der Mehrachsen-Bandlegemaschine steuernd und regelnd zu beeinflussen vermag.

Das Programm des Reglers 100 beinhaltet die Steuerung und Regelung mit einem geschlossenen Regelkreis oder mit einer geschlossenen Regelschleife. Diesem Regelkreis oder dieser Regelschleife werden die Steuerungsbefehle von einem Steuerungsprozessor 304 aus zugeführt und aufgeschaltet. Diese Befehle werden vom Regler 300 verarbeitet, der auch dafür sorgt, daß der Legekopf 20 innerhalb eines normalen Regelkreises in die jeweils zutreffende Position gebracht wird.

Diese Positionen werden mit den Rückmeldungssignalen des adaptiven Steuerungs- und Regelungssystemes den jeweils zutreffenden Ist-Zuständen der Achsen A, C und Z modifizierend angepaßt. Dieses adaptive Steuerungs- und Regelungssystem sorgt dafür,

- daß der auf die Verlegefläche wirkende Druck, d.h. die Positionierung in der Z-Achse, durch Steuerung und Regelung konstant gehalten wird;
- daß durch Steuerung und Regelung zwischen den Schneidevorrichtungen und den Verlegerollen immer eine im wesentlichen konstante Länge des Bandes vorhanden ist;
- daß durch eine effektive Steuerung und Regelung die Positionierung in der A-Achse gewährleistet ist,
- daß von Seite zu Seite der Bandmaterialstreifen immer gleichlang ist;
- und daß durch eine effektive Steuerung und Regelung der Positionierung in der C-Achse das Band unter den Rollen 60 immer exakt angeordnet und geführt ist.

Die dem Regler 300 zugeführten und aufgeschalteten Programmblöcke mit den Maschinenbefehlen werden von einem Steuerungs- und Auswertungsprozessor 304 generiert, der dazu entweder Teilprogramme verarbeitet, die von einem Teilprogrammsystem 320 generiert worden sind, oder aber Teilprogramme, die bereits früher generiert worden und in einem Speichersystem 306 gespeichert sind.

Die aus mehreren Programmblöcken bestehenden Teilprogramme weisen für die natürliche Verlegebahn eines jeden Bandmaterialstreifens eine geometrische Form auf. Zu jeder Verlegebahninformation gehört ein Programmblock, mit dem definiert ist, wo bei einer Verlegebahn die Bandenden abzuschneiden sind und ein oder mehrere Programmblöcke, welche für die Verlegebahnen die jeweiligen Mittellinien definieren.

Bei diesem Format weisen die Programmblöcke alle für die Verlegebahnen einer Wicklungsschicht zutreffenden geometrischen Informationen auf, die aber nicht maschinenspezifisch oder maschinengeeignet sind.

Der Regler 300 akzeptiert aber nur entweder Maschinensprachenbefehle für einen einzigen Bearbeitungsvorgang oder aber Festzyklus-Maschinensprachenbefehle für mehrere Bearbeitungsvorgänge, die in einem einzigen Programmblock zusammengefaßt sind.

Weil in den für die Verlegebahnen zutreffenden Programmblöcken komplexe Informationen für sehr viel mehr Bearbeitungsvorgänge - bspw. für die Achsenbewegung, für das Steuern und Regeln der Band-Abschneidevorrichtung, für das Steuern und Regeln der Rollen und auch sonstige Funktionen - enthalten sind, müssen diese komplexen Verlegebahndaten ausgewertet und in Maschinenbefehle übersetzt werden, die vom Regler 300 akzeptiert und verarbeitet werden können.

Das geschieht im Steuerungsprozessor 304, der die für die Verlegebahnen zutreffenden Programmblökke verarbeitet und zu detaillierten Bewegungs- und Steuerungsblöcken in Maschinensprache erweitert, welche vom Regler 300 akzeptiert und verarbeitet werden können.

Der Teilprogrammgenerator 320 übernimmt einerseits von dem Flächen-Programmspeicher 326 die jeweils für den herzustellenden Gegenstand zutreffenden Grundinformationen und andererseits von einem ATP-Teilprogrammspeicher 328 die Peripheriedaten. Er generiert daraus automatisch die auf einer natürlichen Verlegebahn basierenden Verlegebahndaten, welche dann vom Ausgang des Postprozessors 326 als ein Teilprogramm abgenommen werden können.

Die für die Verlegebahnen zutreffenden Informationen oder das Teilprogramm des Postprozessors 326 können über die drei Schnittstellen 314, 316 und 318 in den Steuerungsprozessor 304 eingegeben und übertragen werden, und zwar folgendermaßen:

- Mit einem Lochstreifen 308 über eine Lochstreifen-Eingabevorrichtung 314;

- mit einem Magnetband 310 über ein Magnetbandgerät 316;
- unmittelbar über eine Telekommunikations-Schnittstelle 118 und über einen Protokollumsetzer 112.

Bei den für die Berechnung der Verlegebahndaten verwendeten Informationen aus dem Flächen-Programmspeicher 336 und bei den ebenfalls für die Berechnung der Verlegebahndaten verwendeten Peripheridaten aus dem ATP-Teilprogrammspeicher 328 handelt es sich um eine rechtwinklige Gruppierung von Punkten, die aufgenommen und erfaßt werden

- von einer mathematischen Abbildung der zur Verlegeform 22 gehörenden Verlegefläche;
- von der Umrißlinie der aufzubringenden Bandmaterialschichten;
- von einer oder mehreren Kontrollinien, welche die Bereiche definieren, in denen für die Abstände zwischen den Verlegbahnen der Bandmaterialstreifen sehr enge Toleranzen eingehalten werden müssen, und die darüber hinaus auch den Winkel definieren, in dem die zu einer jeden Bandmaterialschicht gehörenden Bandmaterial-Verlegbahnen im Hinblick auf die X-Achse aufzubringen sind.

Diese Daten und Informationen werden vom Teilprogramm-Generator 320 mit Hilfe eines konventionellen ATP-Prozessor-Programmes 330 zu einem Teil-Grundprogramm verarbeitet. In diesem Teil-Grundprogramm sind enthalten:

- die geometrischen Daten, mit denen der herzustellende Gegenstand anhand der Anzahl und der Lage der Bandmaterialschichten sowie anhand der allgemeinen Ausrichtung und der Konfiguration der Verlegebahnen für die Bandmaterialstreifen definiert ist.

Für die Erstellung dieses Teil-Grundprogramms werden herangezogen:

- die Flächeninformationen aus dem Datenspeicher 336 und die Befehlsdaten aus den standardmäßigen ATP-Teilprogrammen im Datenspeicher 328.

Bei dem ATP-Prozessor 330 handelt es sich um ein Programm, das für die Erstellung eines Teil-Grundprogrammes aus den angeführten Datenquellen für die Verlegebahnen der Bandmaterialstreifen die notwendige Software zur Verfügung stellt. Dieses Teil-Grundprogramm definiert den jeweils zutreffenden Gegenstand im wesentlichen mit den geometrischen Daten der Bandmaterialschichten. In diesem Teil-Grundprogramm sind die Daten für die natürliche Verlegebahn aber nicht enthalten.

Das aus den verschiedenen Datenquellen erstellte Grundprogramm kann mit einem für die Berechnung von Verlegebahnen und Bandmaterialschichten zuständigen Routineprogramm 322 derart erweitert werden, daß es auch die Daten für die natürlichen Verlegebahnen der Bandmaterialstreifen aufweist. Das für die Berechnung von Verlegebahnen und Bandmaterialschichten zuständige Routineprogramm 322 kann mit Befehlen dazu veranlaßt werden, daß es für den Steuerungsprozessor 304 entweder eine ganze Bandmatrialschicht oder einzelne Bandmaterialstreifen mit den natürlichen Verlegebahnen berechnet und generiert.

Dem Befehl, eine Bandmaterialschicht zu berechnen, folgt das System mit der automatischen Berechnung aller natürlichen Verlegebahnen und Bandabschnittsmöglichkeiten für jeden Bandmaterialstreifen im Bereich der von der Peripherie der Bandmaterialschicht eingeschlossenen Fläche.

Entlang den Kontrollinien wird die für die Abstände zwischen den zur Bandmaterialschicht gehörenden Verlegebahnen bzw. Bandmaterialstreifen die vorgegebene Toleranz streng eingehalten.

Bei zwei aufeinanderfolgenden Verlegebahnen der Bandmaterialstreifen wird zudem die Verlegerichtung der letzteren um 180° gedreht, was wiederum zur Folge hat, daß mit möglichst wenigen Maschinenbewegungen gearbeitet und die Verschwendung von Bandmaterialstreifen möglichst verhindert werden kann.

Nach dem Berechnen aller zu einer Bandmaterialschicht gehörenden Bandmaterialstreifen werden die im Speicher enthaltenen Flächendaten zwecks Darstellung der für die neue Bandmaterialschicht zutreffenden Dicke aktualisiert und auf den neuesten Stand gebracht.

Zum Teilprogrammgenerator 320 gehört auch ein Terminal 331 mit Bildschirm, auf dem der Bediener bzw. Operator die für die Bandmaterialstreifen berechneten und generierten Verlegebahnen durch Sichtkontrolle überprüfen kann.

Mit dem Bildschirm und der zu diesem Terminal 331 gehörenden Tastatur sowie mit einem für die graphische Darstellung der Bandmaterialschichten zuständigen Routineprogramm 324 kann der Bediener bzw. Operator auch die Verlegebahndaten korrigieren sowie die Abstände und Überlappungen zwischen den Bandmaterialstreifen einer Bandmaterialschicht besser kontrollieren.

Das Kennlinienprogramm aus Fig. 9 zeigt die Daten, welche dem Teilprogrammgenerator 320 als Eingangsgrößen zugeführt und aufgeschaltet werden. Hierbei ergibt sich

- daß für die Anfangsfläche oder Startfläche der Verlegeform 22 eine mathematische Flächenabbildung 301 verwendet wird, auf der eine Reihe von Rechteck-Koordinatenpunkten ein Koordinatengitter bilden;
- daß die Gitterlinien auf einer Fläche der X-Y-Ebene 302 zueinander jeweils im gleichen Abstand angeordnet sind, bspw. in einem Abstand von 25,4 mm (1");
- daß die Gitterpunkte in dem - in Fig. 8 gezeigten -Sequenzdatenspeicher 336 derart gespeichert sind, daß für jeden Flächenpunkt die zutrefffenden X-Y-Z-Koordinaten von dort aus für eine Verarbeitung im

Teilprogrammgenerator 320 abgerufen werden können,
- und daß bei dem bevorzugten Ausführungsbeispiel das Rastergitter maximal 600 x 160 Gitterpunkte enthält.

Auf die Flächenabbildung 301 ist der Umriß 304 einer Bandmaterialschicht projiziert. Dabei ergibt sich
- daß mit der Projektion des Umrisses 304 der Bandmaterialschicht die Außenkanten des auf der Verlegefläche der Verlegeform 22 befindlichen, fertigen Gegenstandes definiert sind;
- daß die von der X-Y-Ebene 302 ausgehende Projektion des Bandmaterialschicht-Umrisses 304 eine Gestalt hat, bei der für die Projektion der verschiedenen Bandmaterialschichten die gleichen Abschlußkriterien für die Verlegebahnen eingesetzt und verwendet werden können.

Die mit den Gitterpunkten definierte Fläche ist auch noch hinter den für den herzustellenden Gegenstand zutreffenden Umrißlinien vorhanden, weil bei der Berechnung der natürlichen Verlegebahnen von den berechneten Kantenpunkten manche Punkte auch Positionen einnehmen können, die außerhalb der für den Gegenstand zutreffenden Kanten liegen. Eine derartige Ausdehnung und Erweiterung der Fläche ist notwendig, damit die über die Kanten des herzustellenden Gegenstandes hinausreichenden Punkte auch richtig berechnet werden können.

Mit der Kontrollinie 305 wird entlang den Abständen zwischen den Verlegebahnen eine Zone festgelegt, in der für die Abstände zwischen den Verlegebahnen strenge Toleranzen gelten.

In der X-Y-Ebene ist die Kontrollinie 305 zudem auch noch derart definiert, daß sie auf jede Bandmaterialschicht so projiziert werden kann, wie dies auch für die Umrißlinie 304 . der Fall ist.

Eine Bandmaterialschicht der aus Verbundwerkstoff bestehenden und auf die Fläche 301 verlegten Bandmaterialstreifen ist als Projektion 304′ auf die Z-Achskoordinaten der Fläche 301 dargestellt. Dargestellt ist aber auch die Projektion 305′ der Kontrollinie 305 auf der Fläche 301.

Ein jeder Bandmaterialstreifen, bspw. die Bandmaterialstreifen 307, 309, 311, folgt auf der Fläche 301 einer natürlichen Verlegebahn, bei der kein ungleicher Zug auf die Kanten der Bandmaterialstreifen einwirkt. Die Enden der Bandmaterialstreifen werden derart abgeschnitten, daß sie in die Umrißlinien der vorgegebenen Fläche 301 passen. Um die Maschinenbewegungen möglichst klein zu halten und auch Ausschuß zu vermeiden, wird auf der Fläche 301 jeder Bandmaterialstreifen zu dem ihm benachbarten Bandmaterialstreifen in entgegengesetzter Richtung verlegt. Für die Abstände zwischen benachbarten Bandmaterialstreifen, bspw. für die Abstände 313 zwischen den Bandmaterialstreifen 307 und 309 sowie für die Abstände 315 zwischen den Bandmaterialstreifen 309 und 311, gelten entlang der Projektion der Kontrolllinie 305 sehr strenge Toleranzen, während außerhalb dieser Kontrollinie die Toleranzen nicht so streng sind.

Die Bandmaterialstreifen werden im allgemeinen derart verlegt, daß ihr Winkel zur X-Achse 0°, 45° oder 90° beträgt. Sie können aber auch - und dies gilt vor allem für den Winkel von 45° - abwechselnd mit einem Verlegungswinkel von +45° und einem Verlegungswinkel von -45° aufgebracht werden, mit der Folge, daß durch die Überkreuzverlegung einander benachbarter Bandmaterialstreifen der zu fertigende Gegenstand eine größere Festigkeit erhält.

Es ist leicht verständlich, daß im Hinblick auf eine Bezugsgröße auch mit jedem anderen Verlegewinkel gearbeitet werden kann.

Bei der Berechnung der natürlichen Verlegebahnen wird folgendermaßen verfahren:
- Zunächst einmal wird ein Ansatzpunkt 321 berechnet und auf der Fläche 301 dort vorgesehen, wo die Projektion der Kontrollinie 305′ die natürliche Verlegebahn kreuzt;
- die natürliche Verlegebahn wird in zwei Teilbahnen aufgeteilt, die jeweils im Punkt 321 ihren Ausgangspunkt haben und dabei so berechnet sind, daß sie sich unter einem Kontrollwinkel in zueinander entgegengesetzten Richtungen erstrecken sowie die einander gegenüberliegenden Peripheriesegmente 323 und 325 der Bandmaterialschicht schneiden;
- die berechneten Wicklungsbahnpunkte werden dann zu einer Verlegebahn vereinigt und derart neu geordnet, daß die Verlegebahn zu der ihr benachbarten Verlegebahn in entgegengesetzter Richtung verlegt wird;
- der Verlegebahn-Startwinkel wird im Hinblick auf die XAchse an der Stelle gemessen, wo die Mitte des Bandmaterialstreifens die Kontrollinie kreuzt.

Für die Berechnung der natürlichen Verlegebahn auf einer komplex konturierten Fläche bringt dieses Verfahren ganz bestimmte Vorteile:
- Der Abstand 313 oder 315 zwischen den Bandmaterialstreifen auf der Kontrollinie kann steuernd und regelnd leicht beeinflußt werden, weil die Ansatzpunkte dieser Kontrolllinie zugeordnet sind;
- von der Kontrollinie aus wird die natürliche Verlegebahn in beiden Richtungen generiert, so daß der auf die Bandkanten einwirkende Zug auch dann möglichst klein gehalten ist, wenn für die Verlegebahnabstände keine so strengen Toleranzen Anwendung finden. Dies hat zur Folge, daß Kräuselungen, Überdeckungen und sonstige festigkeitsbeeinträchtigende Verlegungen der Bandmaterialstreifen verhindert werden;

- darüber hinaus kann wegen der Winkelausrichtung der Verlegebahnen zur Kontrollinie hin der Bandmaterialstreifen wirtschaftlich genutzt werden und das Abschneiden der Endbereiche der Bandmaterialstreifen ist unkompliziert.

Die aus Verbundwerkstoff bestehenden Bandmaterialstreifen sollten quer zur Kontrollinie unter einem Winkel verlegt werden, welcher einerseits für den fertigen Schichtstruktur-Gegenstand die optimale Festigkeit gewährleistet, andererseits jedoch den wirtschaftlichen Einsatz der Bandmaterialstreifen ermöglicht.

Das Verfahren zur Bestimmung und Festlegung der auf das interne Koordinatensystem der Bandlegemaschine bezogenen, wirklichen Bezugspositionen auf der zur Verlegeform 22 gehörenden Verlegefläche 424 wird anschließend im Zusammenhang mit Fig. 10 näher erläutert.

Auf der dargestellten, konkreten bzw. wirklichen Verlegefläche 424 der Verlegeform 22 sind die drei Bezugspositionen 400, 402 und 404 mit Strichkreuzen markiert. Diese Bezugspositionen können dabei - sofern sie nur dauerhaft erkennbar sind - mit Farbe aufgebracht, in die Fläche eingelassen oder auch auf andere Art und Weise vorgesehen werden. Diese drei konkreten bzw. wirklichen Bezugsmarkierungen 400, 402 und 404 entsprechen dabei den Punkten 406, 408 und 410 auf der als Phantombild wiedergegebenen Flächenabbildung 301.

Die Flächenabbildung 301 kann aus der konkreten bzw. wirklichen Verlegefläche 424 herausgedreht werden, weil die Verlegeform 22 nicht richtig angeordnet und ausgerichtet ist. Die im Teilprogramm enthaltenen Anweisungen und Instruktionen sind aber relativ zur Flächenabbildung 301 generiert worden, nicht aber relativ zur konkreten bzw. tat sächlich gegebenen Verlegefläche 424. Das hat aber zur Folge, daß die vom Bandlegekopf 20 zu vollziehenden und durch die mathematische Abbildung der Fläche bestimmten Bewegungsabläufe um das Ausmaß der vorhandenen Fehlausrichtung falsch ablaufen müssen.

Für das ordnungsgemäße und einwandfreie Zusammenarbeiten der Bandlegemaschine mit der Verlegeform 22 ist es daher von wesentlicher Bedeutung, daß eine Ausrichtung der in den Teilprogramm-Instruktionen der Bandlegemaschine enthaltenen geometrischen Punkte auf die tatsächlich gegebene bzw. konkrete Verlegefläche 424 der Verlegeform 22 herbeigeführt, das umgekehrte Vorgehen also vermieden wird. Es soll also keine Neuausrichtung der Verlegeform 22 mit ihrer konkreten bzw. tatsächlich gegebenen Verlegefläche 424 auf die mathematische Abbildung in der Bandlegemaschine herbeigeführt werden.

Das vorgesehene Verfahren umfaßt:

- eine Methode, mit der die für die Verlegefläche 424 der Verlegeform 22 gegebene tatsächliche Ausrichtung dardurch bestimmt wird, daß die Koordinaten der auf dieser Verlegefläche 424 vorhandenen Bezugsmarkierungen 400, 402, 404 gemessen werden;
- und eine Methode, mit der unter Nutzung der durch das Messen festgestellten Ausrichtung der Verlegeform 22 sowie der bekannten Ausrichtung der mathematischen Flächenabbildung in der Bandlegemaschine eine Transformationsfunktion entwickelt wird, mit der wiederum die in den Teilprogramm-Instruktionen enthaltenen geometrischen Punkte aus der meathematischen Flächenabbildungs-Ausrichtung in die tatsächlich gegebene Ausrichtung gebracht werden können.

Der tatsächlich stattfindende Ausrichtungs-Vorgang wird unter Bezugnahme auf Fig. 10 in Verbindung mit dem Funktionsablaufdiagramm nach Fig. 14 ausführlich erläutert.

Gemäß Fig. 14 ruft der Bediener bzw. Operator ein mit "AUSRICHTUNG" bezeichnetes Spezialprogramm des Steuerungsprozessors 304 (Fig. 8) ab und startet damit den Ausrichtvorgang. Nach Fig. 8 wirkt der Steuerungsprozessor 304 auf den Regler 300 ein und bringt diesen in einen Betriebszustand, bei dem die Bewegungsabläufe entweder mittels der Steuertafel 413 (Fig. 10) manuell gesteuert werden, oder aber mit Feinvorschub bzw. Schleichvorschub des Bandlegekopfes 20 ablaufen können.

Nach Fig. 14 findet im Block A10 die Programmeinleitung statt. Hierzu betätigt der Bediener bzw. Operator die zum Regler 300 gehörende Programm-Einleitungstaste und signalisiert dadurch, daß er bereit ist, den Ausrichtungsvorgang einzuleiten und den Bandlegekopf 20 durch Handsteuerung in Position zu fahren.

In diesem Steuerungszustand kann dann der Bandlegekopf mit Hilfe der Steuertafel 413 sowohl auf der X-Achse als auch auf der Y-Achse in jede Richtung bewegt und damit positioniert werden. Empfehlenswert ist dabei, daß sich der Bediener mit der, vorzugsweise hängend angeordneten, Steuertafel 413 in der Nähe der Verlegefläche 424 der Verlegeform 22 aufhält, damit er die Ausrichtbewegungen des Bandlegekopfes 20 genau beobachten kann.

Mit der Einschaltung des Lasersystems 212 (Fig. 5 und 6) geht das Programm im Block A14 zum nächsten Programmschritt über. Das Programm wird dann durch eine Programmschleife geführt, welche für das Aufnehmen und Erfassen der Koordina ten der auf der Verlegefläche 424 vorhandenen sowie auf das interne Koordinatensystem der Bandlegemaschine bezogenen Markierungen 400, 402, 404 (fig. 10) vorgesehen ist. Zu dieser Programmschleife gehören die Programmblöcke A 10 bis A 30, welche über die an der Steuertafel 413 erfolgende Eingabe der X-Y-Befehle beeinflußt werden.

Da nach Fig. 10 drei Bezugsmarkierungen 400, 402 und 404 vorgesehen sind, muß zur Durchführung des Ausrichtvorgangs die betreffende Programmschleife dreimal durchlaufen werden.

Die Eingabe der X-Y-Befehle erfolgt über die Blöcke A 16 bis A 30.

Wenn der Programmblock A 16 arbeitet, dann kann mit den von der Steuertafel 413 als Eingabe zugeführten und aufgeschalteten Befehlen +X und +-X der Lichtpunkt in der X-Y-Ebene unmittelbar auf eine der Bezugsmarkierungen 400, 402, 404, bspw. auf die Bezugsmarkierung 402, eingestellt werden.

Fig. 10 verdeutlicht, daß der Bandlegekopf 20 mit einer für den Bediener bzw. Operator erkennbaren Laser-Lichtpunktspur schrittweise verfahren und dabei in der X-Y-Ebene genau auf die auf der Verlegefläche 424 der Verlegeform 22 vorhandene Bezugsmarkierung 402 eingestellt werden kann.

Jede im Feinvorschub erfolgende, schrittweise Bewegung des Bandlegekopfes 20 oder auch jede durch Handsteuerung veranlaßte Bewegung des Bandlegekopfes 20 wird dabei so lange weitergeführt, bis die Kontrolle in Block A 20 (Fig. 14) ein positives Resultat gebracht hat.

Wenn der Bediener bzw. Operator das Meßsondensystem 75 (Fig. 3, 5 und 6) durch Zentrierung des Lichtpunktes in der X-Y-Ebene genau auf das Markierungskreuz der Bezugsmarkierung 402 ausgerichtet hat, dann betätigt er auf der Steuertafel 413 (Fig. 10) die Taste 412 als "MESSGRÖSSENERFASSUNG". Solange das durch die Betätigung der Taste 412 als "MESSGRÖSSENERFASSUNG" ausgelöste Signal noch nicht als Eingabe aufgenommen worden ist, sorgt das Programm dafür, daß weiterhin die von der Steuertafel 413 ausgehenden Befehle aufgenommen werden und der Bandlegekopf 20 in Inkrementalschritten auf der X-Achse und der Y-Achse bewegt und verfahren wird.

Wenn der Programmblock A 22 den mit der Taste 412 ausgelösten Befehl "MESSGRÖSSENERFASSUNG" richtig erkannt und "SPEICHERN" übernommen hat, sorgt das Programm dafür, daß die für die X-Achse zutreffende Ist-Postion des Bandlegekopfes 20 und eine Verschiebungsgröße für die gegenüber dem Zentrum der Legerollen 60 exzentrische Achsanordnung der Meßsonde 212, 214 (Fig. 5 und 6) gespeichert werden.

In ähnlicher Weise gespeichert werden auch die für die Y-Achse zutreffende Ist-Position des Bandlegekopfes 20 sowie die Verschiebungsgröße für die gegenüber dem Zentrum der Bandlegerollen 60 exzentrische Achsanordnung der Meßsonde 212, 214.

Diese Positionen können von den für die X-Achse und für die Y-Achse zuständigen Drehmeldern des Bandlegekopfes 20 direkt übernommen werden.

Die Verschiebungskonstanten sind in dem Routineprogramm "AUSRICHTUNG" als Daten gespeichert, die sich nicht mehr ändern.

Mit den nun folgenden Programmschritten A 24 bis A 26 wird die Koordinate der Z-Achse dadurch bestimmt, daß das Meßsondenelement 214 mit Feinvorschub und in kleinen Inkrementalschritten in Richtung der Z-Achse automatisch in Richtung zur Verlegefläche 424 hin nach unten gefahren wird.

Nach jedem kleinen Inkrementalschritt kontrolliert das Programm, ob die zum Meßsondenelement 214 gehörende Schaltvorrichtung den Endschalter 224 betätigt und damit das Auftreffen auf der Bezugsmarkierung 402 gemeldet hat. Das Auftreffen des Meßsondenelementes 214 auf die Verlegefläche 424 hat zur Folge, daß die Kontrolle in Block A 26 positiv ausfällt und daß daher eine Übertragung des Steuerungsprogramms zum Programmblock A 28 hin stattfindet, in welchem die für die Bezugsmarkierung 402 auf der Verlegefläche 424 zutreffenden Ist-Position der Z-Achse gespeichert wird.

Bei dem für die jeweils zutreffende Position gespeicherten Koordinatenwert für die Z-Achse handelt es sich dabei um denjenigen Wert, welcher um die Verschiebungsgrößen verringert ist, die daraus resultieren, daß die Spitze der Meßsonde 214 in ihrem voll ausgefahrenen Zustand über das Zentrum der Bandlegerollen 60 hinausragt, wenn sie beim Auftreffen auf die Verlegefläche 424 den als Sensor wirkenden Endschalter 224 betätigt.

Schließlich bewirkt der Programmschritt A 27, daß das Meßsondenelement 214 und der Bandlegekopf 20 wieder entlang der Z-Achse in ihre Ausgangsposition zurückgefahren werden. Es ist dann für den Programmschritt A 28 der Bandlegekopf 20 von der Verlegefläche 424 der Verlegeform 22 so weit entfernt, daß diese frei ist, wenn der Programmschritt A 30 eingeleitet wird.

Das mit dem Programmschritt A 30 erfolgte Zurückfahren des Bandlegekopfes signalisiert dem Bediener bzw. Operator, daß nunmehr eine neue Programmschleifenverarbeitung für die Koordinatenbestimmung der nächsten Bezugsmarkierung, bspw. der Bezugsmarkierung 404, beginnen kann. Diese wird dann durch von der Steuertafel 413 her übertragene Befehle eingeleitet, indem der Laser-Lichtpunkt durch Verfahren in der +-X-Ebene und in der +-Y-Ebene auf das entsprechende Markierungskreuz eingestellt und zentriert wird.

Die Programmblöcke A 16 bis A 30 werden solange verarbeitet, bis auch die Koordinaten für die zweite Bezugsmarkierung 404 gespeichert sind.

Wenn die Koordinaten für die dritte Bezugsmarkierung 400 bestimmt und gespeichert worden sind, wird

mit dem Programmschritt A 34 das Lasersystem 212 ausgeschaltet.

Damit nunmehr ein Teilprogramm gestartet werden kann, werden die jeweils für die drei Bezugsmarkierungen 400, 402 und 404 zutreffenden Istwert-Koordinaten durch den Programmschritt A 36 in den Steuerungsprozessor 304 (Fig. 8) übertragen. Diese Istwert-Koordinaten werden sodann im Steuerungsprozessor 304 für einen Vergleich mit den jeweils zutreffenden, mathematischen Flächenabbildungspunkten der Verlegeform 22 gespeichert. Nach dem in Fig. 15 dargestellten Funktionsablauf-Diagramm werden aus dem Block A 38 die Flächenabbildungspunkte und aus dem Block A 40 die konkreten bzw. wirklichen Punkte abgerufen. Mit den Programmschritten A 38 und A 40 werden von einem Transformationsalgorithmus oder einer Transformationsfunktion einerseits die Koordinaten der Flächenabbildungspunkte 408, 406 und 410 aus dem Teilprogramm speicher abgerufen und andererseits auch noch die Koordinaten der auf der Verlegefläche 424 der Verlegeform 22 vorhandenen wirklichen Punkt 400, 402 und 404.

Sodann wird mit dem Programmschritt A 42 nach Fig. 15 mit Hilfe der zwischen den konkreten bzw. wirklichen Punkten 400, 402 und 404 sowie den Flächenabbildungspunkten 408, 410, 406 gegebenen Unterschiede eine Transformationsfunktion entwickelt. Diese Transformationsfunktion ist ein Hinweis darauf, wie ein zum Teilprogramm gehörender Punkt zur Anpassung an die konkrete bzw. wirkliche Verlegefläche 424 der Verlegeform 22 verschoben und gedreht werden muß.

In Block A 44 der Fig. 15 durchlaufen die für die natürliche Verlegebahn eines Bandmaterialstreifens zutreffenden Punkte ebenfalls einen Transformationsvorgang. Dabei entsteht ein neues Teilprogramm, welches nicht auf die Flächenabbildungspunkte des internen Koordinatensystems, sondern vielmehr auf die konkreten bzw. wirklichen Punkte auf der Verlegefläche 424 der Verlegeform 22 bezogen und ausgerichtet ist.

Nachdem die geometrischen Daten durch den Transformationsvorgang auf die konkrete bzw. wirkliche Verlegefläche 424 ausgerichtet worden sind, werden sie vom Steuerungsprozessor 304 (Fig. 8) in Maschinensprachenbefehle übersetzt, mit denen dann die Bewegungsabläufe des Bandlegekopfes 20 steuernd und regelnd in der Weise beeinflußt werden können, daß der Bandlegekopf 20 der natürlichen Verlegebahn für den jeweiligen Bandmaterialstreifen exakt folgt.

Es sei in diesem Zusammenhang noch darauf hingewiesen, daß anstelle der Transformation des vollständigen Teilprogramms auch die Transformation eines jeden zu einer natürlichen Verlegebahn gehörenden Punktes stattfinden kann, und zwar dann, wenn die Maschinensprachenbefehle für die jeweils zutreffenden Bewegungsabläufe generiert werden.

Da die Ausrichtung-Transformation von einer Fläche zur anderen als eine Funktion zu betrachten ist, kann das Programm des Steuerungsprozessors 304 vor seiner Übertragung in die maschinengeeignete Form für jeden Teilprogrammpunkt nur einen zusätzlichen Verarbeitungsschritt durchführen.

Dieser Transformationsvorgang ist erforderlich, wenn die konkrete bzw. wirkliche Verlegefläche 424 der Verlegeform 22 nicht genau auf die interne mathematische Abbildung dieser Fläche in der Bandlegemaschine ausgerichtet ist. Ohne den Transformationsvorgang würde nämlich der Bandlegekopf in um die Größe der Fehlausrichtung verschobenen, also falschen Bahnen bewegt und verfahren. Diese Bahnabweichung kann dabei als aus zwei separaten Teilen bestehend betrachtet werden, wobei nach Fig. 10 auf der Flächenabbildung 301 ein Punkt 408 als Bezugspunkt definiert wird und wobei die Verlegefläche 424 der Verlegeform 22 von diesem Punkt 408 auf den Punkt 400 verschoben und dann um diese Verschiebung gedreht wird.

Damit ein Kompensationsalgorithmus oder eine Kompensationsfunktion für diese Verschiebungs- und Rotationsabweichung bestimmt und entwickelt werden kann, müssen zunächst einmal auf jeder Fläche die entsprechenden Bezugspunkte bestimmt werden.

Die Anzahl der für jede Fläche zu wählenden Bezugspunkte kann dabei variieren.

Für das Ausführungsbeispiel nach Fig. 10 der Zeichnung sind bspw. drei Bezugspunkte gewählt worden, weil damit - wie noch ausführlich erläutert wird - zwei auf den Flächenabbildungspunkten basierende, orthonormale Koordinatensysteme gebildet werden können.

In Fig. 11 ist dargestellt, wie mit den drei zur Verlegefläche 424 der Verlegeform 22 gehörenden, als $P_1$, $P_2$, $P_3$ bezeichneten Punkten 400, 402 und 404 die beiden Vektoren $V_1$ und $V_2$ gebildet werden können.

Dabei ergibt sich das Gleichungssystem

$V_1 = P_2 - P_1$ und
$V_2 = P_3 - P_1$.

Mit Hilfe dieser Vektoren erhält man eine orthonormale Triade von Einheitsvektoren, wenn einer der Punkte, bspw. der Punkt $P_1$ zum wirklichen Ursprung erklärt wird sowie die Vektoren $V_1$ und $V_2$ miteinander

multipliziert werden.

Eine Gruppe der orthonormalen Einheitsvektoren $U_1$, $U_2$, $U_3$ kann gemäß Fig. 12 eine Systemtriade bilden. Dazu wird mit den Gleichungen

$U_1 = V_1 \cdot V_2$,
$U_2 = V_2$ und
$U_3 = U_1 \cdot V_2$

gearbeitet.

Die Berechnung einer anderen Triade von Einheitsvektoren basiert auf den Flächenabbildungspunkten 408, 410 und 406 der Flächenabbildung 301. Sie sind als die Punkt $P_1'$, $P_2'$, $P_3'$ definiert. Jeder dieser zur Flächenabbildung 301 gehörenden Punkte ist dabei jeweils auf die für die konkrete bzw. wirkliche Verlegefläche 424 gewählten Punkte 400, 402, 404 bezogen. Bei dieser Berechnung wird dabei in ähnlicher Weise verfahren wie bei der bereits vorher erläuterten Berechnung.

Die beiden in Fig. 11 dargestellten Vektoren $V_3$ und $V_4$ erhält man dabei mit den Gleichungen

$V_3 = P_2' - P_1'$ und
$V_4 = P_3' - P_1'$.

Eine orthonormale Triade der Einheitsvektoren $W_1$, $W_2$, W3, wie sie in Fig. 13 dargestellt ist, erhält man aus den beiden Vektoren $V_3$ und $V_4$, wenn diese miteinander multipliziert werden, wie dies auch beim ersten System der Fall ist. Damit ergibt sich nur das Gleichungssystem

$W_1 = V_3 \cdot V_4$,
$W_2 = V_4$ und
$W_3 = W_1 \cdot V_4$.

Es ist hier darauf hinzuweisen, daß zwecks Einhaltung der zwischen den beiden Flächen 301 und 424 jeweils zutreffenden Ausrichtung die beiden Triaden in der gleichen Reihenfolge berechnet und bestimmt werden müssen.

Die beiden Systeme

$$U = \begin{bmatrix} U_1 \\ U_2 \\ U_3 \end{bmatrix} \text{ und } W = \begin{bmatrix} W_1 \\ W_2 \\ W_3 \end{bmatrix}$$

werden mit mit einer Transformationsmatrix

$$T = \begin{bmatrix} T_1 \\ T_2 \\ T_3 \end{bmatrix}$$

gegeneinandergedreht, wobei

$UT = W$

ist.

Wenn die Transformationsmatrix T berechnet und bestimmt werden kann, dann kann jeder Punkt der Flächenabbildung 301 mit einem Transformationsvorgang derart zur konkreten bzw. wirklichen Verlegefläche 424 in Beziehung gesetzt werden, daß der Bandlegekopf 20 relativ zur konkreten bzw. wirklichen Verlegefläche 424 bewegt und verfahren wird, nicht jedoch relativ zur internen Flächenabbildung 301.

Die Transformationsmatrix kann mit der inversen Matrix $U^{-1}$ mit dem Gleichungssystem berechnet werden

$U^{-1}UT = U^{-1}W$ und
$T = U^{-1}W.$

Wird für ein aus den Vektoren $U_1$, $U_2$, $U_3$ bestehendes orthonormales System $U^{-1} = U^T$ gesetzt, wobei $U^T$ die Transponierungsmatrix von U ist, dann erhält man die Gleichung

$T = U^TW.$

Durch Erweiterung von T, $U^T$ und W erhält man das nachstehend angeführte Matrixsystem

$$\begin{matrix} T_{1X} & T_{1Y} & T_{1Z} \\ T_{2X} & T_{2Y} & T_{2Z} \\ T_{3X} & T_{3Y} & T_{3Z} \end{matrix} \qquad \begin{matrix} U_{1X} & U_{2X} & U_{3X} \\ U_{1Y} & U_{2Y} & U_{3Y} \\ U_{1Z} & U_{2Z} & U_{3Z} \end{matrix} \qquad \begin{matrix} W_{1X} & W_{1Y} & W_{1Z} \\ W_{2X} & W_{2Y} & W_{2Z} \\ W_{3X} & W_{3Y} & W_{3Z} \end{matrix}$$

dabei ist:

$T_{1X} = U_{1X}W_{1X} + U_{2X}W_{2X} + U_{3X}W_{3X}$
$T_{1Y} = U_{1X}W_{1Y} + U_{2X}W_{2Y} + U_{3X}W_{3Y}$
$T_{1Z} = U_{1X}W_{1Z} + U_{2X}W_{2Z} + U_{3X}W_{3Z}$

$T_{2X} = U_{1Y}W_{1X} + U_{2Y}W_{2X} + U_{3Y}W_{3X}$
$T_{2Y} = U_{1Y}W_{1Y} + U_{2Y}W_{2Y} + U_{3Y}W_{3Y}$
$T_{2Z} = U_{1Y}W_{1Z} + U_{2Y}W_{2Z} + U_{3Y}W_{3Z}$

$T_{3X} = U_{1Z}W_{1X} + U_{2Z}W_{2X} + U_{3Z}W_{3X}$
$T_{3Y} = U_{1Z}W_{1Y} + U_{2Z}W_{2Y} + U_{3Z}W_{3Y}$
$T_{3Z} = U_{1Z}W_{1Z} + U_{2Z}W_{2Z} + U_{3Z}W_{3Z}.$

Mit dieser Transformationsmatrix kann jeder auf die Matrix T und auf die mathematische Flächenabbildung 301 bezogene Punkt $P_{Po}$ ($X_{Po}$, $Y_{Po}$, $Z_{Po}$) in die Ausrichtung der konkreten bzw. wirklichen Verlegefläche 424 gedreht werden.

Mit der Annahme, daß sowohl das System U als auch das System W den gleichen Ursprung haben, kann die Transformationsmatrix T dann erst verwendet werden, wenn die zur mathematischen Flächenabbildung 301 gehörenden Punkte 408, 410, 406 zuvor mit einer Verschiebungsgleichung behandelt worden sind.

Wenn jeder Punkt der mathematischen Flächenabbildung 301 als Punkt $P_{Po}$ angenommen werden kann, dann bewirkt die Verschiebungsgleichung

$P_p = P_{Po} - P1$

daß der Punkt $P_{Po}$ zum Punkt $P_p$ hin in dem neuen Einheitsvektor-Koordinatensystem verschoben wird.

In der zuvor angeführten Gleichung handelt es sich bei dem Punkt $P_1$ um den Ursprung der Einheitsvektor-Triade $U_1$, $U_2$, $U_3$ und bei Punkt $P_p$ um den verschobenen Punkt, für den die Transformationsmatrix eingesetzt und verwendet werden kann.

Die Transformationsmatrix kann dann als

$P_pT = P_p'$

eingesetzt und verwendet werden.

In dieser Gleichung ist der Punkt $P_p'$ der Punkt nach der Transformation. Dieser Punkt $P_p'$ ist aber immer noch auf die Triade U bezogen und muß deshalb mit der Verschiebungsgleichung

$P_p' + P_1 = P_t$

auf die konkrete bzw. wirkliche Verlegefläche 424 zurückgeführt werden. Bei dem mit dieser Gleichung angegebenen Punkt $P_t$ handelt es sich um den auf die konkrete bzw. wirkliche Verlegefläche 424 transformierten und verschobenen Punkt, welcher zum Flächenabbildungspunkt $P_{Po}$ in Beziehung steht.

Der Punkt $P_t$ ist auf die wirkliche bzw. konkrete Verlegefläche 424 derart bezogen, daß mit ihm diese Verlegefläche 424 auf das Koordinatensystem der Mehrachsen-Bandlegemaschine ausgerichtet wird.

Der Punkt $P_t$ sowie die anderen Transformierungs- und Verschiebungspunkte werden dann für das Generieren maschinenspezifischer Befehle verwendet, mit deren Hilfe der Bandlegekopf 20 in seinen Achsen bewegt und verfahren werden kann.

Vorstehend ist die Erfindung nur anhand der in der Zeichnung dargestellten Ausführungsbeispiele erläutert. Sie kann selbstverständlich ohne weiteres auch auf andere Ausführungsbeispiele übertragen und dabei den jeweiligen Erfodernissen entsprechend geändert und modifiziert werden.

**Ansprüche**

1. Verfahren zum Ausrichten einer konkreten bzw. wirklichen Fläche (424), Z.B. einer Form (22) auf ein internes Koordinatensystem einer sich relativ zur konkreten bzw. wirklichen Fläche (424) bewegenden Maschine, insbesondere einer Mehrachsen-Bandlegemaschine, deren Bewegungsabläufe von einem Teilprogramm mit einer Reihe von Flächenpunkten und mit einer Betriebsfunktion gesteuert und geregelt werden, wobei mit den Flächenpunkten anhand einer mathematischen Abbildung (301) der konkreten bzw. wirklichen Fläche (424) eine von der Maschine zurückzulegende Bahn definiert ist und wobei die Betriebsfunktion auf das interne Koordinatensystem (302) bezogen ist,
**dadurch gekennzeichnet,**
daß auf der konkreten bzw. wirklichen Fläche (424), z.B. der Form (22) die Koordinaten von mehreren wirklichen und auf das interne Koordinatensystem (302) bezogenen konkreten Punkten (400, 402, 404) durch Messen aufgenommen und erfaßt werden;
daß die Koordinaten der zur mathematischen Abbildung (301) der konkreten bzw. wirklichen Fläche (424) gehörenden und auf das interne Koordinatensystem (302) bezogenen, jeweils zutreffenden Punkte (408, 410, 406) aufgenommen und erfaßt werden;
daß mit Hilfe der konkreten bzw. wirklichen Flächenpunkte (400, 402, 404) sowie der Flächenabbildungspunkte (408, 410, 406) eine Transformationsfunktion generiert wird, welche die Ausrichtung der konkreten bzw. wirklichen Fläche (424) auf die mathematische Abbildung (301) dieser wirklichen Fläche (424) definiert;
daß mit der Transformationsfunktion die Punkte (408, 410, 406) transformiert werden, mit der Folge, daß dadurch mehrere transformierte Punkte generiert werden, mit denen die von der Maschine im Hinblick auf die mathematische Flächenabbildung (301) der wirklichen Fläche (424) zu vollziehenden Bewegungsabläufe der Maschine definiert sind;
und daß die programmierten Punkte (408, 410, 406) durch die transformierten Punkte ersetzt werden, welche für die Maschine eine Bewegungsbahn definieren, die auf die konkrete bzw. wirkliche Fläche (424) ausgerichtet ist.

2. Verfahren nach Anspruch 1,
**dadurch gekennzeichnet,**
daß zusätzlich zu dem messenden Aufnehmen und Erfassen der Koordinaten der mehreren wirklichen Punkte (400, 402, 404) für jeden dieser tatsächlichen bzw. wirklichen Punkte (400, 402, 404) der Abstand zum Ursprung des internen Koordinatensystems (302 bzw. 301) gemessen und erfaßt wird (214, 224).

3. Verfahren nach Anspruch 2,
**dadurch gekennzeichnet,**
daß ein zur Maschine gehörendes Konstruktionselement (20) relativ zu dem wirklichen Punkt (z.B. 402) der konkreten bzw. wirklichen Fläche (424) bewegt und verfahren wird, bis es im wirklichen Punkt (z.B. 402) auf die konkrete bzw. wirkliche Fläche (424) auftrifft,
und daß dabei die Koordinaten dieses wirklichen Flächenpunktes mit den Positionierungskoordinaten des Maschinenelementes bestimmt werden.

4. Verfahren nach einem der Anspreüche 1 bis 3,
**dadurch gekennzeichnet,**
daß das Maschinenelement (20) in der Horizontalrichtung (X-Achse und Y-Achse) verfahren wird, bis es auf den wirklichen Flächenpunkt (z.B. 402) in der Horizontalebene ausgerichtet ist.

5. Verfahren nach einem der Ansprüche 1 bis 4,
**dadurch gekennzeichnet,**
daß das Maschinenelement (20) in Vertikalrichtung (Z-Achse) bewegt und verfahren wird, bis es auf den wirklichen Flächenpunkt (z.B. 402) auftrifft.

6. Verfahren zum Ausrichten einer konkreten bzw. wirklichen Fläche (424), z.B. einer Form (22), auf eine für sie zutreffende, mathematische Flächenabbildung (301), welche zum Generieren eines die Bewegungsabläufe der Maschine relativ zur konkreten bzw. wirklichen Fläche (424) steuernden und regelnden Teilprogrammes verwendet wird,
**gekennzeichnet durch**
das Auswählen bzw. Messen von drei Flächenpunkten (400, 402, 404) auf der konkreten bzw. wirklichen Fläche (424); das Festlegen eines dieser Flächenpunkte (z.B. 400) als Ursprung oder Ursprungspunkt ($P_1$);
das Berechnen eines ersten Vektors (V1), der von dem vorerwähnten Ursprung bzw. Ursprungspunkt ($P_1$) aus zu einem zweiten Flächenpunkt (402 bzw. $P_2$) der drei wirklichen Flächenpunkte (400, 402, 404) führt;
das Berechnen eines zweiten Vektors ($V_2$), welcher vom Ursprung bzw. Ursprungspunkt ($P_1$) aus zu einem dritten Flächenpunkt (404 bzw. $P_3$) der drei wirklichen Flächenpunkte (400, 402, 404) führt;
das Bilden eines orthonormalen Einheitsvektor-Satzes der Einheitsvektoren ($U_1$, $U_2$, $U_3$) aus den beiden Vektoren ($V_1$ und $V_2$);
das Auswählen bzw. Aufnehmen und Erfassen mindestens dreier den konkreten bzw. wirklichen Flächenpunkten (400, 402, 404) entsprechenden Flächenabbildungspunkte (408, 410, 406) der Flächenabbildung (301) aus dem Teilprogramm;
das Festlegen eines Flächenabbildungspunktes (z.B. 408) der Flächenabbildungspunkte (408, 410, 406) als Flächenabbildungsursprung ($P_1'$);
das Berechnen eines dritten Vektors ($V_3$), welcher vom Flächenabbildungsursprung ($P_1'$) aus zu einem zweiten Abbildungspunkt (410 bzw. $P_2'$) führt;
das Berechnen eines vierten Vektors ($V_4$), welcher vom Flächenabbildungsursprung ($P_1'$) aus zum dritten Flächenabbildungspunkt (406, $P_3'$) der Flächenabbildungspunkte (408, 410, 406) führt;
das Bilden eines orthonormalen Einheitsvektor-Satzes der Einheitsvektoren ($W_1$, $W_2$, $W_3$) aus dem dritten Vektor ($V_3$) und dem vierten Vektor ($V_4$);
das Berechnen eines Transformationsvektors ($T_1$, $T_2$, $T_3$), mit dem die Einheitsvektoren ($U_1$, $U_2$, $U_3$) zu den Einheitsvektoren ($W_1$, $W_2$, $W_3$) gedreht werden;
das Generieren eines Transformationspunktes (UT) aus dem Transformationsvektor (T1, T2, T3) und aus einem Flächenabbildungspunkt ($P_1'$) des Teilprogrammes;
und das Ersetzen des programmierten Punktes ($P_1'$) durch den Transformationspunkt (UT), wobei die Bewegungsabläufe der Maschine vom Teilprogramm in Ausrichtung auf die konkrete bzw. wirkliche Fläche (424) gesteuert und geregelt werden.

7. Verfahren nach Anspruch 6,
**dadurch gekennzeichnet,**
daß zusätzlich zum Generieren eines Transformationspunktes (UT) der Flächenabbildungspunkt (408) vom Flächenabbildungsursprung ($P_1'$) aus zum Ursprungspunkt (400 bzw. $P_1$) der konkreten bzw. wirklichen Fläche (424) hin verschoben wird.

8. Positionierungssystem bzw. -vorrichtung zur Ausübung des Verfahrens nach einem oder mehreren der Ansprüche 1 bis 7, insbesondere für eine Mehrachsen-Bandlegemaschine, deren Bandlegekopf (20) zum Aufbringen der aus Verbundmaterial bestehenden Bandmaterialstreifen auf eine komplexe Konturenfläche (424) einer Verlegeform (22) bzw. eines Dornes zumindest in einer ersten Koordinatenachse (X), in einer zweiten Koordinatenachse (Y) und in einer dritten Koordinatenachse (Z) bewegbar ist,
**gekennzeichnet durch**
eine Vorrichtung (212), die einen sichtbaren Lichtstrahl erzeugt;
eine Vorrichtung (200, 204, 214), durch die die Lichtstrahl-Vorrichtung (212) am Bandlegekopf (20) montiert ist, um auf der Verlegefläche (424) der Form (22) einen Führungslichtpunkt abzubilden;
eine Vorrichtung (413), durch die die Bewegung des Bandlegekopfes (20) steuer- und regelbar ist, um den Führungslichtpunkt der Lichtstrahl-Vorrichtung (212, 214) auf den Bezugspunkt (z.B. 400) der Verlegefläche (424) der Form (22) auszurichten;
und eine Vorrichtung (A22), mit der im Koinzidenzpunkt die Position des Bandlegekopfes (20) als Bezugsposition zur Verlegefläche (424) der Form (22) für mindestens zwei Koordinatenachsen (X-Achse und Y-Achse) der drei Koordinatenachsen (X-Achse, Y-Achse, Z-Achse) aufnehmbar und speicherbar ist.

9. Positionierungssystem bzw. -vorrichtung nach Anspruch 8,
**dadurch gekennzeichnet,**
daß die Lichtstrahl-Vorrichtung (212) ein Lasersystem ist.

10. Positionierungssystem bzw. -vorrichtung nach Anspruch 8,
**dadurch gekennzeichnet,**
daß die Achse der Lichtstrahl-Vorrichtung (212) parallel zur dritten Koordinatenachse (Z-Achse) ausgerichtet ist.

11. Positionierungssystem bzw. -vorrichtung nach Anspruch 8,
**dadurch gekennzeichnet,**
daß ein Meßsondensystem (214, 224) am Bandlegekopf (20) angeordnet und relativ zu diesem ausfahrbar (204, 206, 208) vorgesehen ist.

12. Positionierungssystem bzw. -vorrichtung nach Anspruch 8,
**dadurch gekennzeichnet,**
daß das Meßsondensystem (214, 224) durch eine Antriebsvorrichtung (208, 206) aus- und einfahrbar am Bandlegekopf (20) aufgehängt ist.

13. Positionierungssystem bzw. -vorrichtung nach Anspruch 12,
**dadurch gekennzeichnet,**
daß die Meßsonde (214) eine Zentralbohrung enthält, durch die der Lichtstrahl der Lichtstrahl-Vorrichtung (212) geführt ist (Fig. 7).

14. Positionierungssystem bzw. -vorrichtung nach Anspruch 13,
**dadurch gekennzeichnet,**
daß der Bandlegekopf (20) in der dritten Koordinatenachse (Z-Achse) über einen steuer- und regelbaren Antrieb gegen die Verlegefläche (424) der Form (22) hin verfahrbar sowie durch Auftreffen der Meßsonde (214) auf die Verlegefläche (424) stillsetzbar ist.

15. Positionierungssystem bzw. -vorrichtung nach Anspruch 14,
**gekennzeichnet durch**
eine auf das Auftreffen der Meßsonde (214) auf die Verlegefläche (424) ansprechende Sensorvorrichtung (Endschalter 224).

16. Positionierungssystem bzw. -vorrichtung nach Anspruch 15,
**gekennzeichnet durch**
einen Meßwertspeicher (A28), in den die Position des Bandlegekopfes in Richtung der dritten Koordinatenachse (Z-Achse) beim Ansprechen des Meßsondenelementes (214) bzw. des Endschalters (224) übertragbar ist.

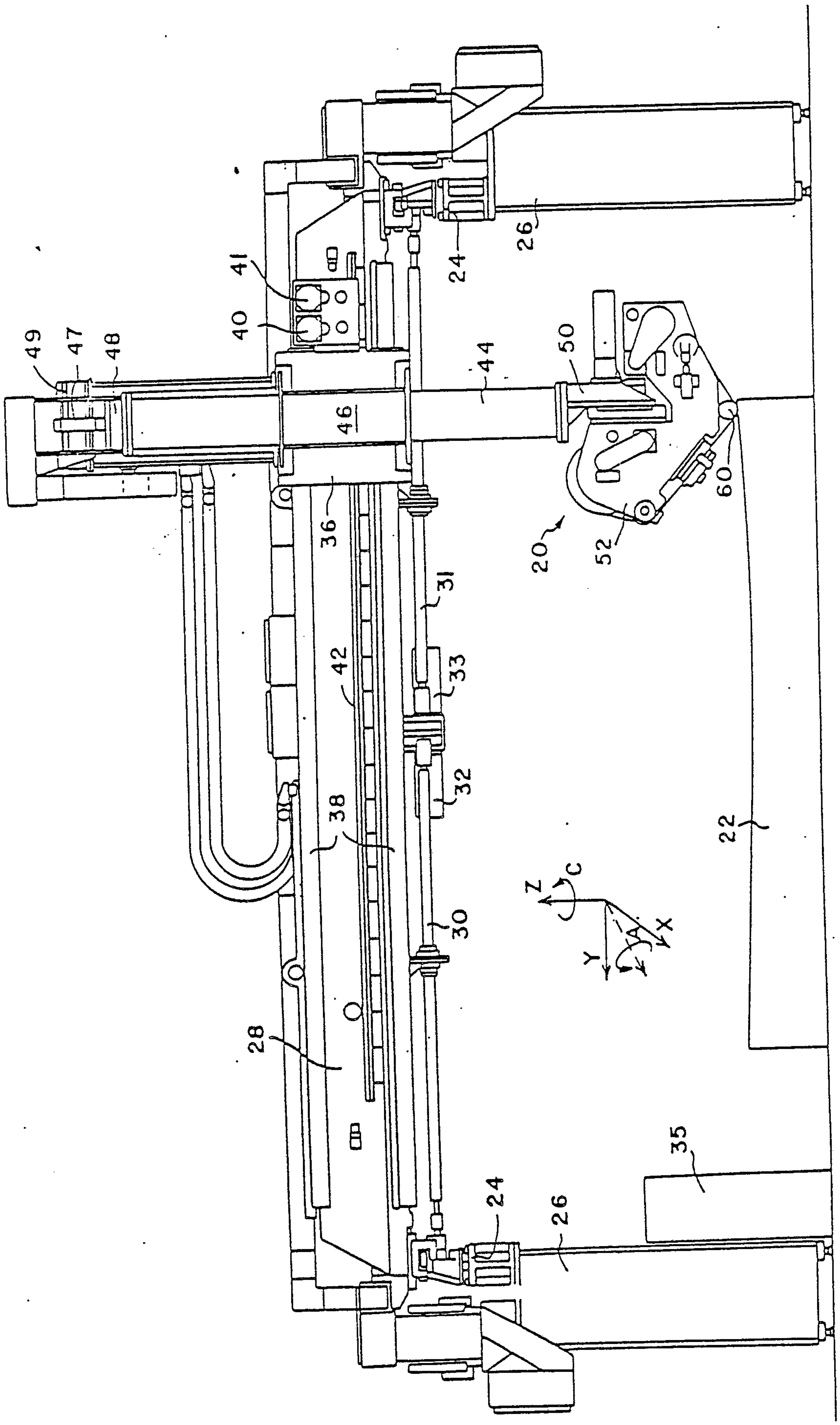
49
47
48
40
41
24
26
44
50
46
36
20
52
60
31
42
33
32
38
22
Z
C
Y
X
A
30
28
35
24
26

FIG. 1

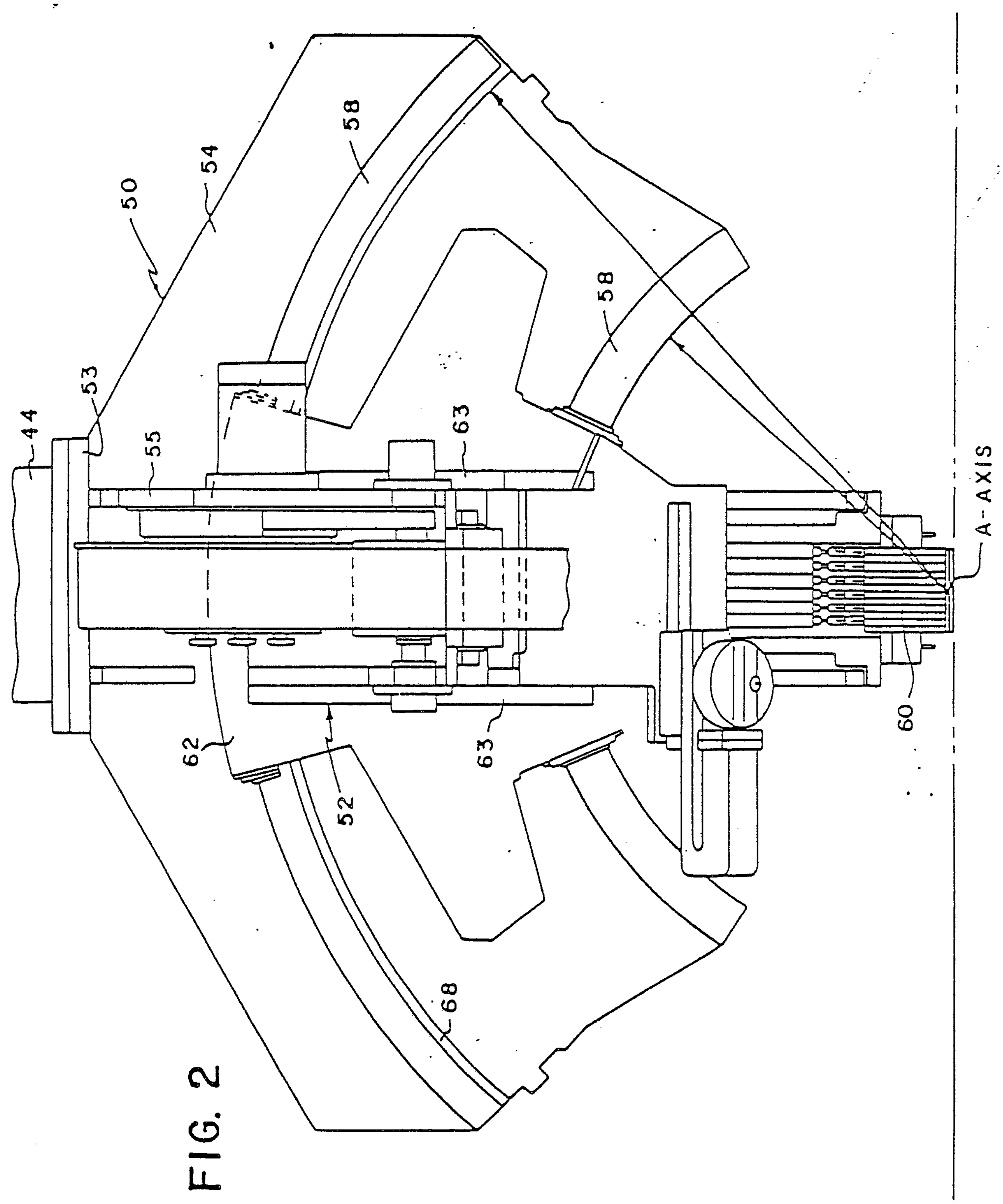


FIG. 2

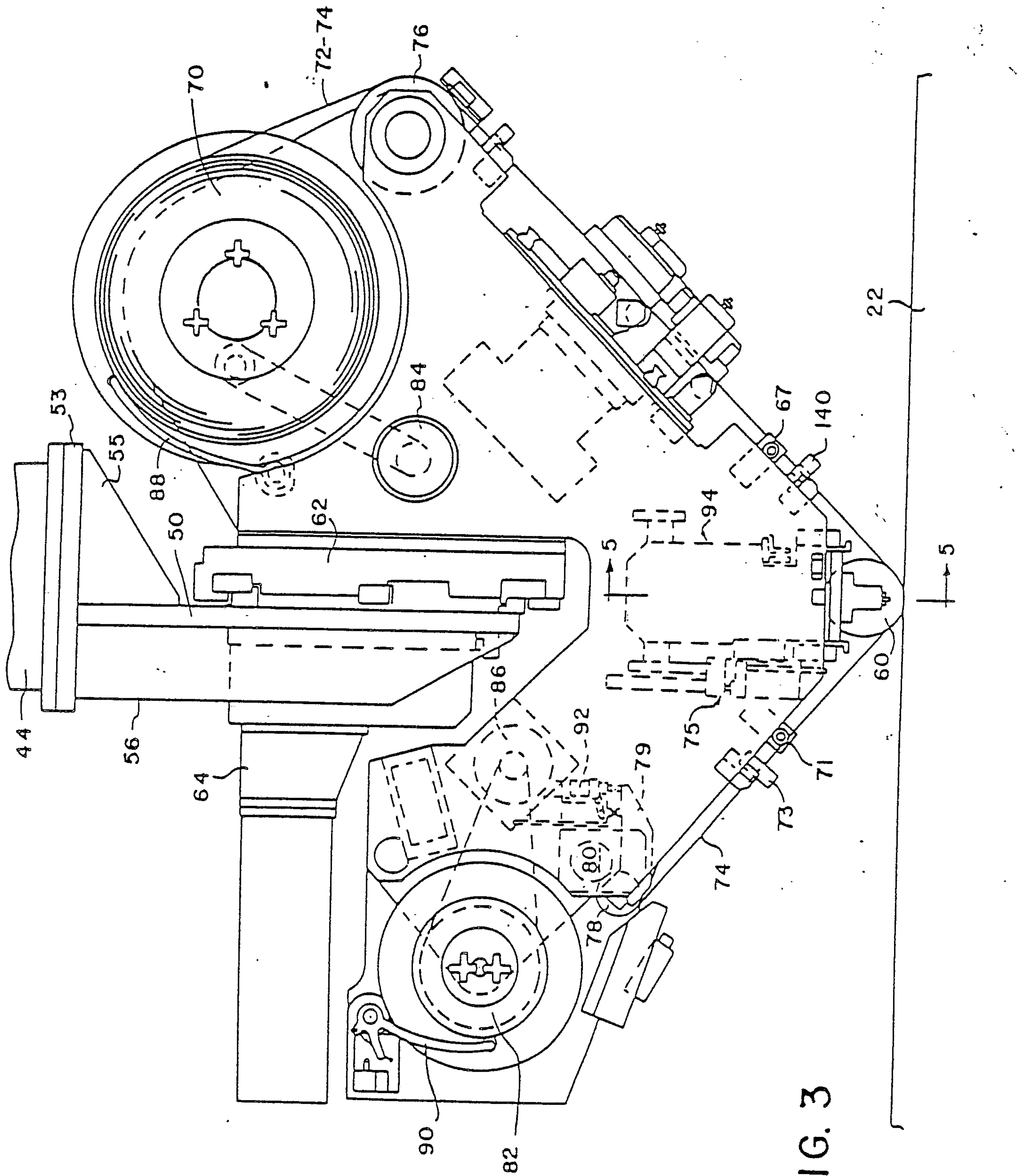
72-74
76
70
22
53
55
88
84
67
140
50
62
94
5
5
60
86
44
56
92
75
71
64
79
73
80
74
78
90
82

FIG. 3

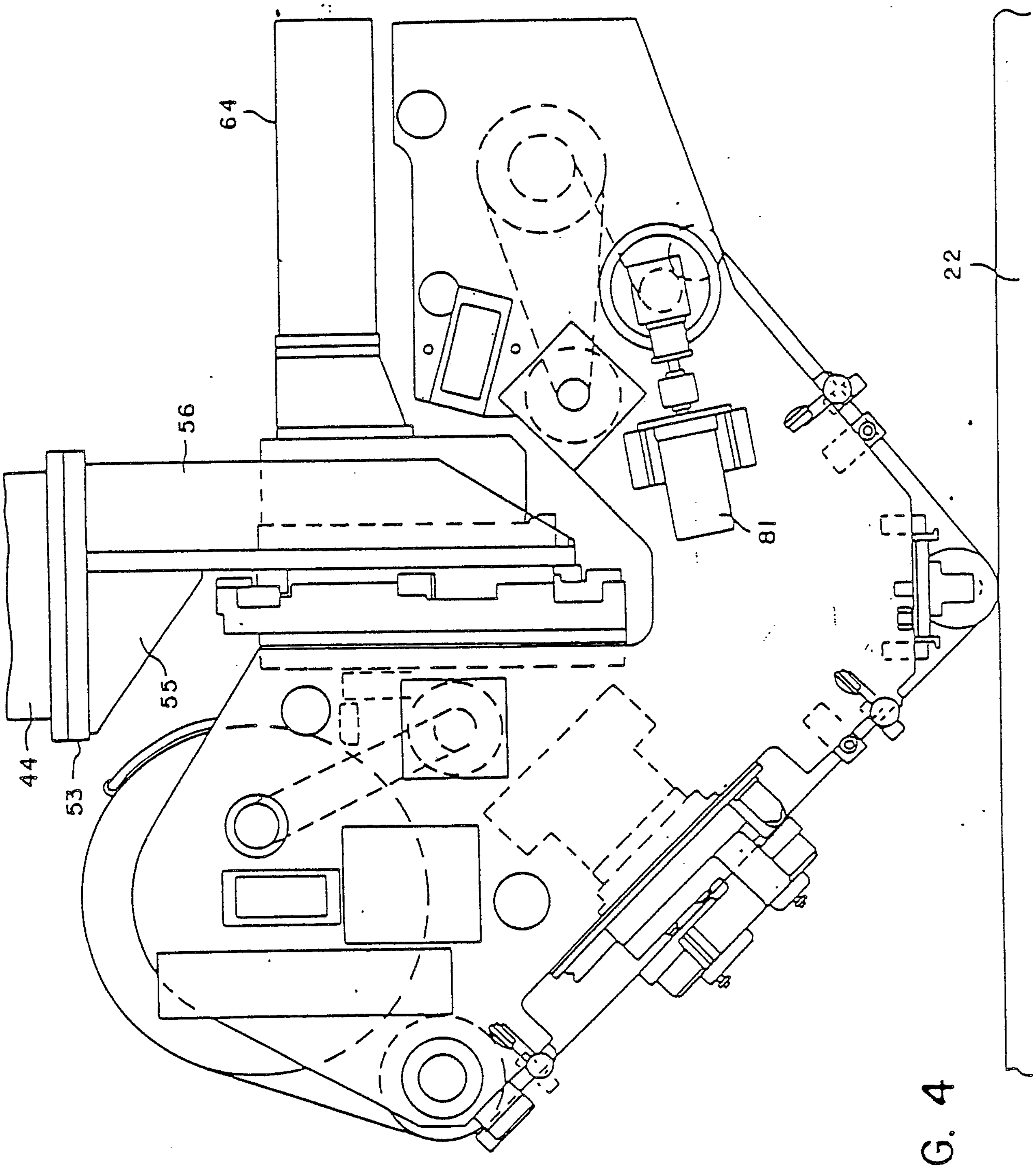


FIG. 4

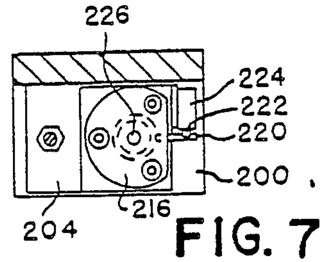


FIG. 7

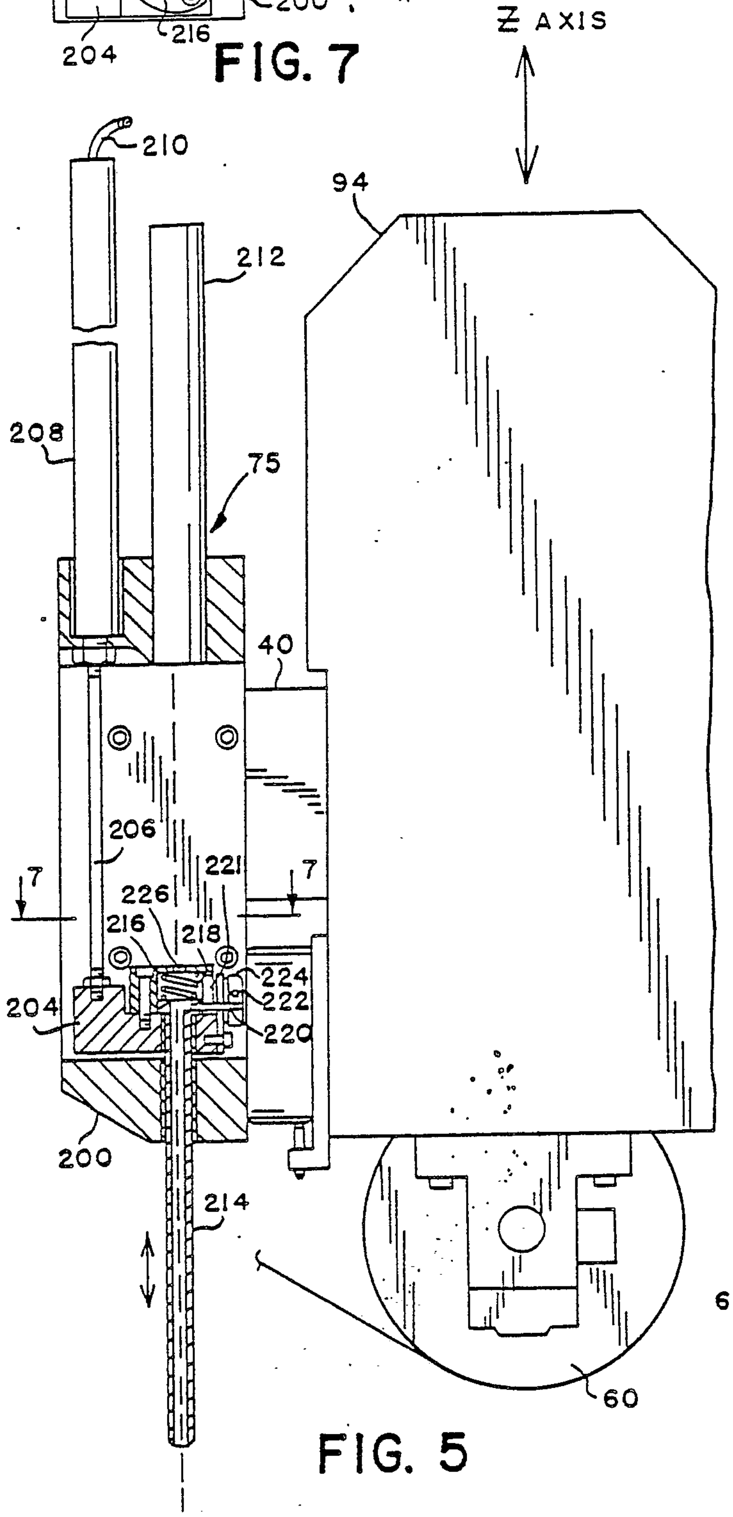


FIG. 5

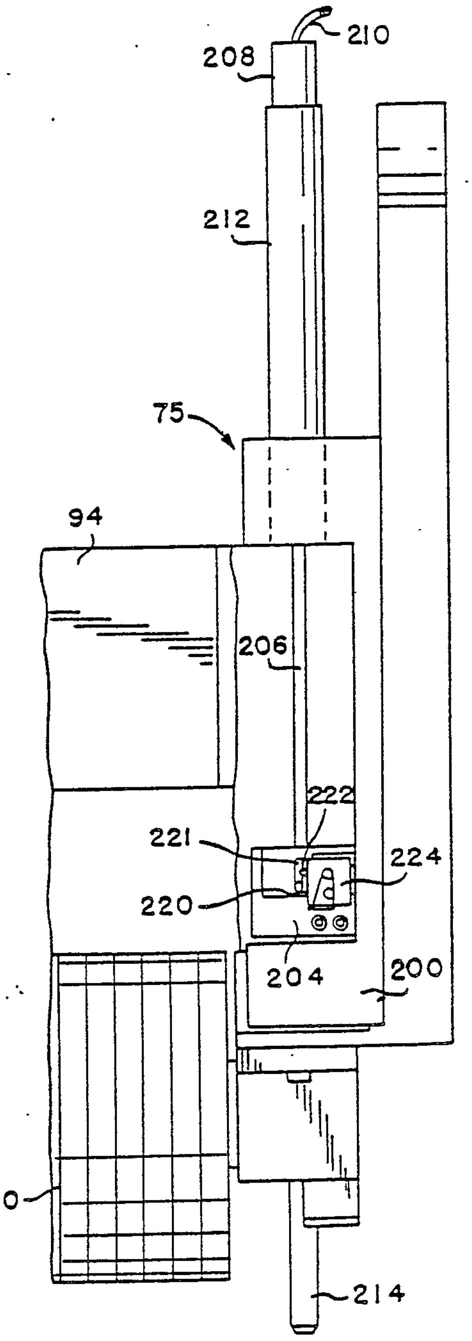


FIG. 6

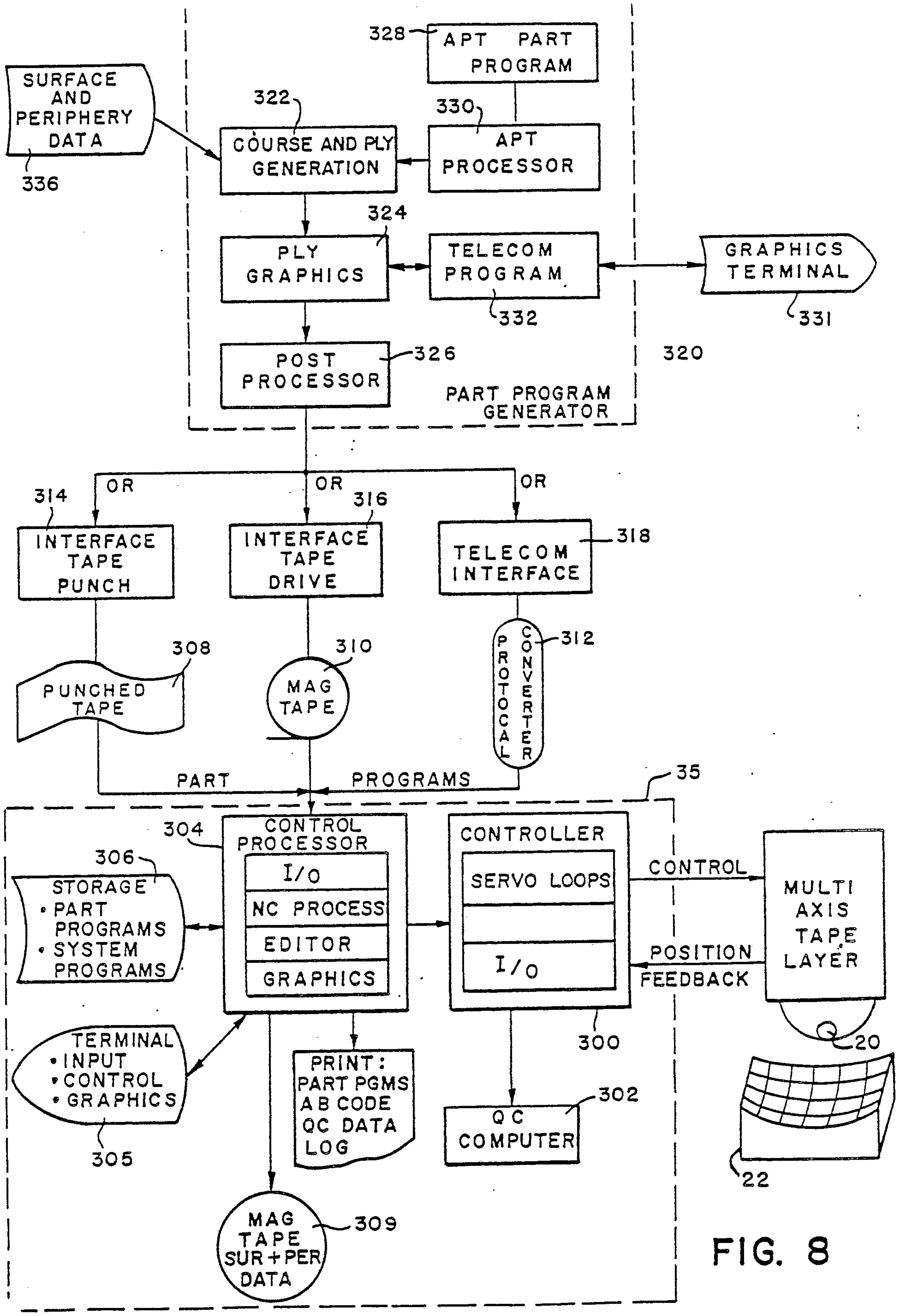
328
APT PART PROGRAM
330
APT PROCESSOR
322
COURSE AND PLY GENERATION
SURFACE AND PERIPHERY DATA
336
324
PLY GRAPHICS
TELECOM PROGRAM
332
GRAPHICS TERMINAL
331
POST PROCESSOR
326
320
PART PROGRAM GENERATOR
OR
OR
OR
314
INTERFACE TAPE PUNCH
316
INTERFACE TAPE DRIVE
TELECOM INTERFACE
318
308
PUNCHED TAPE
310
MAG TAPE
PROTOCAL CONVERTER
312
PART
PROGRAMS
35
304
CONTROL PROCESSOR
I/O
NC PROCESS
EDITOR
GRAPHICS
306
STORAGE
• PART PROGRAMS
• SYSTEM PROGRAMS
CONTROLLER
SERVO LOOPS
I/O
CONTROL
POSITION FEEDBACK
MULTI AXIS TAPE LAYER
20
22
TERMINAL
• INPUT
• CONTROL
• GRAPHICS
305
PRINT: PART PGMS AB CODE QC DATA LOG
300
302
QC COMPUTER
MAG TAPE SUR+PER DATA
309

FIG. 8

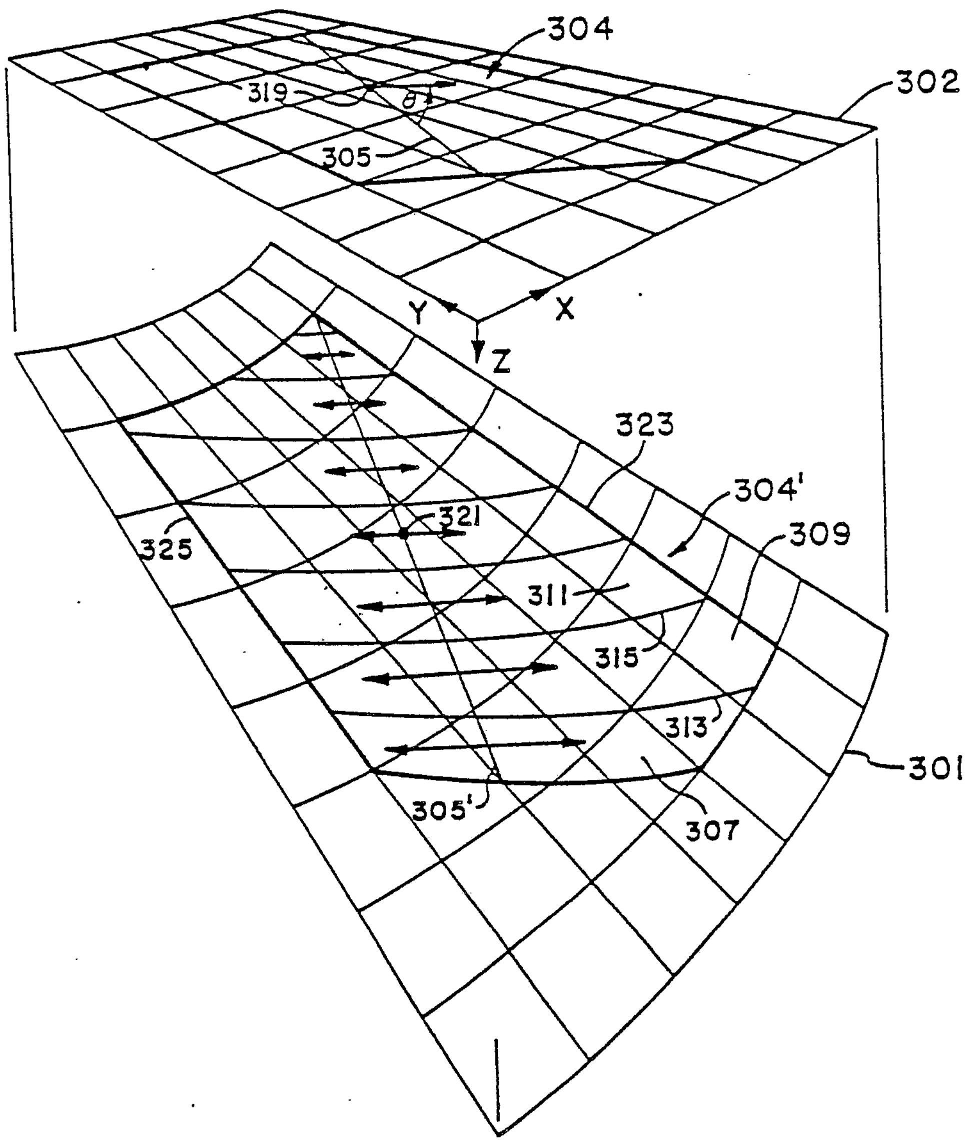


FIG. 9

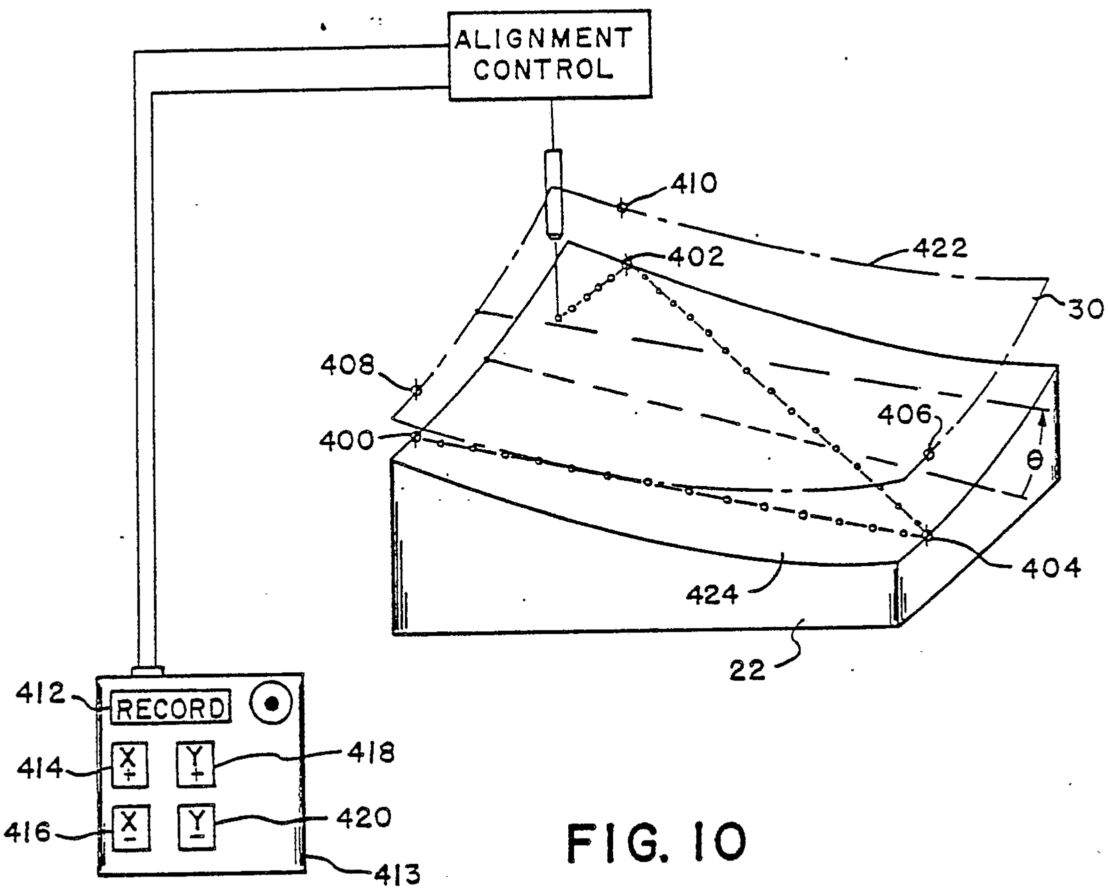


FIG. 10

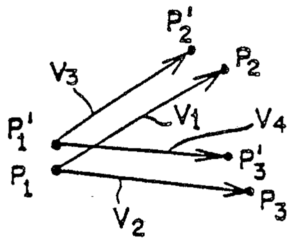


FIG. 11

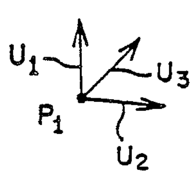


FIG. 12

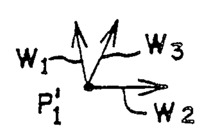


FIG. 13

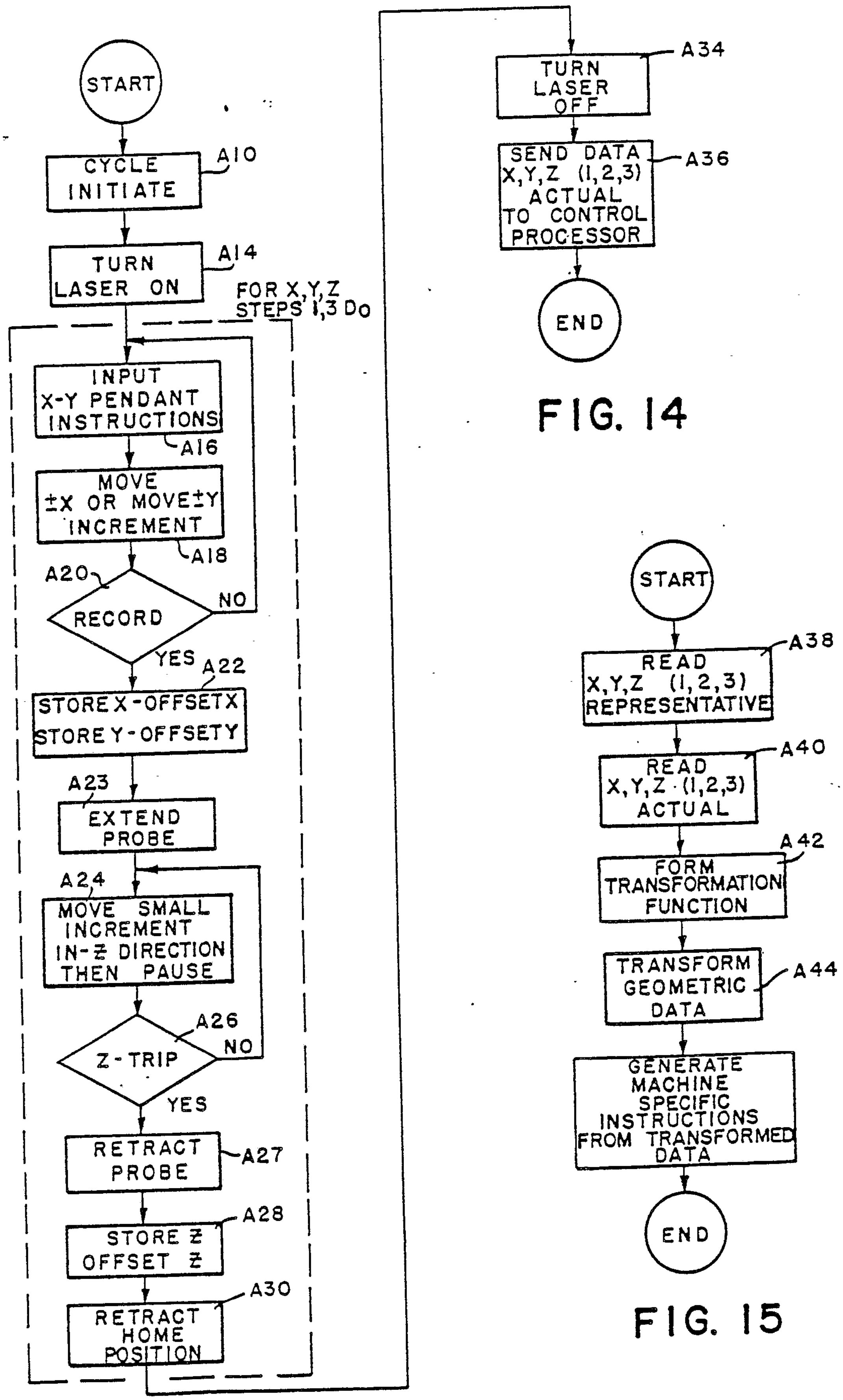
START
CYCLE INITIATE
A10
TURN LASER ON
A14
FOR X,Y,Z STEPS 1,3 Do
INPUT X-Y PENDANT INSTRUCTIONS
A16
MOVE ±X OR MOVE±Y INCREMENT
A18
A20
RECORD
NO
YES
A22
STORE X-OFFSETX STORE Y-OFFSETY
A23
EXTEND PROBE
A24
MOVE SMALL INCREMENT IN-Z DIRECTION THEN PAUSE
A26
Z-TRIP
NO
YES
RETRACT PROBE
A27
STORE Z OFFSET Z
A28
RETRACT HOME POSITION
A30
TURN LASER OFF
A34
SEND DATA X,Y,Z (1,2,3) ACTUAL TO CONTROL PROCESSOR
A36
END

START
READ X,Y,Z (1,2,3) REPRESENTATIVE
A38
READ X,Y,Z (1,2,3) ACTUAL
A40
FORM TRANSFORMATION FUNCTION
A42
TRANSFORM GEOMETRIC DATA
A44
GENERATE MACHINE SPECIFIC INSTRUCTIONS FROM TRANSFORMED DATA
END

FIG. 14

FIG. 15

Europäisches Patentamt

# EUROPÄISCHER RECHERCHENBERICHT

Nummer der Anmeldung

EP 87 11 4705

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | AUTOMATIC WELDING, Band 36, Nr. 1, Januar 1983, Seiten 45-49, Cambridge, GB; V.T. ANTONENKO: "Adaptation of a robot to linear and angular displacements of the work during spot welding" * Seite 46, rechte Spalte, Zeile 7 - Seite 49, rechte Spalte, Zeile 4 * --- | 1-3,6,7 | G 05 B 19/403 |
| A | US-A-4 639 878 (GMF ROBOTICS CORP.) * Spalte 7, Zeile 28 - Spalte 8, Zeile 24; Spalte 10, Zeile 65 - Spalte 11, Zeile 64; Figur 3 * --- | 1-3,6,7 | |
| A | PATENT ABSTRACTS OF JAPAN, Band 10, Nr. 52 (P-432)[2109], 28. Februar 1986; & JP-A-60 195 611 (HITACHI SEISAKUSHO K.K.) 04-10-1985 * Zusammenfassung * --- | 1,6 | |
| A | GB-A-2 083 658 (CINCINNATI MILACRON INC.) * Seite 2, Zeilen 31-91; Seite 3, Zeilen 7-17,85-99; Seite 4, Zeilen 29-33; Figur 1 * --- | 1,4,5,9 -12,14-16 | **RECHERCHIERTE SACHGEBIETE (Int. Cl.4)** G 05 B 19 |
| A | EP-A-0 114 362 (HITACHI) * Seite 8, Zeile 17 - Seite 10, Zeile 13; Seite 12, Zeile 12 - Seite 13, Zeile 24 * ----- | 1,6 | |

Der vorliegende Recherchenbericht wurde für alle Patentansprüche erstellt

| Recherchenort | Abschlußdatum der Recherche | Prüfer |
|---|---|---|
| DEN HAAG | 14-12-1988 | HAUSER L.E.R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument